(19) Europäisches Patentamt / European Patent Office / Office européen des brevets

(11) **EP 4 408 657 B1**

(12) **EUROPEAN PATENT SPECIFICATION**

(45) Date of publication and mention
of the grant of the patent:
**18.02.2026 Bulletin 2026/08**

(51) International Patent Classification (IPC):
**B32B 7/08** (2019.01) **B32B 15/08** (2006.01)
**B32B 15/20** (2006.01) **F16J 15/00** (2006.01)
**H05K 7/20** (2006.01)

(21) Application number: **22813381.5**

(52) Cooperative Patent Classification (CPC):
**B32B 7/08; B32B 15/08; B32B 15/20; F16J 15/102;
F16J 15/104; F16J 15/122; B32B 2307/50;
B32B 2457/00**

(22) Date of filing: **30.09.2022**

(86) International application number:
**PCT/US2022/077361**

(87) International publication number:
**WO 2023/056428 (06.04.2023 Gazette 2023/14)**

(54) **STEPPED GASKETS FOR THERMAL INTERFACES AND METHODS OF MAKING AND USING THEREOF**

GESTUFTE DICHTUNGEN FÜR THERMISCHE SCHNITTSTELLEN UND VERFAHREN ZUR HERSTELLUNG UND VERWENDUNG DAVON

JOINTS ÉTAGÉS POUR INTERFACES THERMIQUES ET LEURS PROCÉDÉS DE FABRICATION ET D'UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.10.2021 US 202117492349**

(43) Date of publication of application:
**07.08.2024 Bulletin 2024/32**

(73) Proprietor: **Carbice Corporation
Atlanta, GA 30310 (US)**

(72) Inventors:
• **COLA, Baratunde**
  **Atlanta, Georgia 30310 (US)**
• **GREEN, Craig**
  **Atlanta, Georgia 30310 (US)**
• **PRINZI, Leonardo**
  **Atlanta, Georgia 30310 (US)**
• **ANDERSON, Erik**
  **Atlanta, Georgia 30310 (US)**

(74) Representative: **Potter Clarkson
Chapel Quarter
Mount Street
Nottingham NG1 6HQ (GB)**

(56) References cited:
**EP-A1- 3 405 013 US-B1- 10 561 040**

## Description

### CROSS-REFERENCE TO RELATED APPLICATION

This application claims priority to and benefit of U.S. Utility Application No. 17/492,349, filed October 1, 2021.

### FIELD OF THE INVENTION

This invention is in the field of thermal interfaces and gasket materials, as well as methods of making and using thereof.

### BACKGROUND OF THE INVENTION

It is known that thermal interfaces or joints formed of at least two plates which are fastened, such as by bolts, and a compressible material, such as a gasket, in between the plates. At least one of the plates is subject to unwanted plate deformation or curvature. The inclusion of a gasket material between two bolted plates can lead to even further deformation or curvature, where thinner gaskets can limit but not eliminate the extent of plate deformation or curvature. The plate deformation or curvature causes formation of gap(s) which decrease and/or limit the contact area between the plates and gasket and negatively impacts the ability of thermal interface to conduct heat efficiently. Increasing gasket thickness uniformly can increase contact area, but thicker gaskets can result in greater plate deformation or curvature. Because plate deformation or curvature increases with maximum deflection (near the fastening (bolt) locations), increasing thickness of the gasket increases curvature, thereby making it difficult to make center contact consistently without resorting to extremely thick gaskets.

US10561040 describes systems and methods for a gasket that allows for a single cooling cold plate to touch one or more devices. These devices may have precise but varying thermal interfaces and mounting pressure requirements; and height and co-planarity tolerances that need to be accommodated. The gasket may be sandwiched in between a top stiffener plate and a floating cold plate along an outer perimeter of the gasket; and a rigid, cold plate base and a bottom stiffener plate along an inner perimeter of the gasket. The resulting seal allows coolant to flow between the rigid and floating cold plates as these plates move (i.e., float) with respect to one another. Thus, the gasket aids in a cooling apparatus achieve an optimum thermal interface with each of the one or more devices simultaneously, while accounting for the individual tolerance variations across each device.

EP3405013 describes an electronic device including a housing, a printed circuit board located inside the housing, an electrical element mounted on the printed circuit board, and a shield can that covers the electrical element. A recess area is formed on at least a portion of the shield can, and a metal structure is mounted in the recess area to cool heat generated by the electrical element.

Accordingly, a key challenge is to address the shortcomings of known thermal interfaces or joints due to the limitations caused by the plate deformation.

Thus, there is a need for addressing the formation of gap(s) caused by plate deformation in fastened thermal interfaces or joints.

Therefore, it is an object of the invention to provide thermal interfaces or joints with increased contact regions/areas which at least minimize the negative effects caused by plate deformation.

It is also an object of the invention to provide means of making and using such thermal interfaces or joints.

### SUMMARY OF THE INVENTION

According to the present invention there is provided a thermal interface according to claim 1. Also provided is a method of fabricating a thermal interface according to claim 9. Additionally provided is a device comprising a thermal interface according to claim 14.

Thermal interfaces or joints and methods of making thereof are described herein.

The thermal interface or joint includes two plates, a base plate (bottom plate) and a top plate, which typically exhibits deformation, deflection, or curvature, either when the two plates are fastened (e.g., bolted) or during manufacture of the plates. The top and bottom plates can be made of any suitable material, having any suitable shape and dimensions, and thickness for use as a thermal interface. The two plates are usually made of the same material, have the same shape and dimensions, and optionally the same thickness.

The top and bottom plates of the thermal interface or joint are fastened by one or more fasteners where the one or more fasteners join the first and the second plates through one or more holes present on the top and the bottom plates. There may be any number of the one or more fastener holes present on both plates in the same positions on each plate, as may be needed to allow for fasteners to join the two plates. The one or more fasteners are used to fasten the first (base or bottom) plate and second (top) plates through each of the fastener holes. The one or more fasteners are selected from threaded fasteners, clamps, clips, push pins, rivets, a pneumatic press, a hydraulic press, or combinations thereof.

In some instances, for the thermal interfaces and joints described the at least one or more additional contact regions provided by use of a stepped gasket provides an increase in temperature uniformity of the first and/or second plates exhibiting plate deformation, deflection, or curvature thereby providing an average thermal conductance across the thermal interface at least 25% higher, 30% higher, 40% higher, or 50% higher than that of the same thermal interface with a single layer gasket that is not stepped therein. The thermal conductance is defined as the time rate of steady state heat flow through a unit area of the thermal interface or joint induced by a unit temperature difference between the thermal interface surfaces.

In certain instances, for the thermal interfaces and joints described the at least one or more additional contact regions provided by use of a stepped gasket provides an increase in contact area between the stepped gasket and the at least one of the first and/or the second plates exhibiting plate deformation, deflection, or curvature thereby providing an average thermal conductance across the thermal interface at least 25% higher, 30% higher, 40% higher, or 50% higher than that of the same thermal interface with a single layer gasket that is not stepped therein. The thermal conductance is defined as the time rate of steady state heat flow through a unit area of the thermal interface or joint induced by a unit temperature difference between the thermal interface surfaces.

The use of stepped gaskets introduces one or more contact regions or areas between the stepped gasket and the plate exhibiting deformation or curvature, as compared to use of a single layer gasket. Stepped gaskets can be designed to match or modify (improve) the thermal profile of the plates. Stepped gaskets can distribute contact loads more evenly for better overall uniformity. The number of layers of a stepped gasket and relative location of layers present in a stepped gasket can be positioned based on interface curvature modeling to properly position or produce a desired number of contact points or regions which improve the thermal performance of the thermal interface or joint.

The use of stepped gaskets provides at least one or more contact regions with the at least one of the first and/or the second plates exhibiting plate deformation, deflection, or curvature, as compared to use of a single layer gasket that is not stepped. For a given stepped gasket each layer included may provide at least one, two, three, or four independent contact regions to the at least one of the first and/or the second plates exhibiting plate deformation, deflection, or curvature, as compared to a gasket without that layer. In some instances, the one or more contact regions resulting from use of a stepped gaskets can be said to contact at least about 5%, 10%, 20%, 30%, 40%, 50%, 60%, 70%, 80%, or 90% of the surface of the at least one of the first and/or the second plates exhibiting plate deformation, deflection, or curvature. In some instances, the one or more contact regions resulting from use of a stepped gaskets can be said to contact at least about 5% to 25%, about 5% to 50%, about 5% to 75%, or about 5% to 90%, and sub-ranges within, of the surface of the at least one of the first and/or the second plates exhibiting plate deformation, deflection, or curvature. The formation of one or more contact regions and resulting increase in contact area between the gasket and plates provides an increase in the overall thermal conductivity of the thermal interface or joint.

In some instances, each of the plurality of layers of the stepped gasket is independently made of a material selected from graphite, carbon fiber, silicone, thermoplastic elastomers, rubber, and acrylic.

In some instances, stepped gasket can be made of multilayered or multitiered structures containing carbon nanotube arrays or sheets. For example, the stepped gasket can be a multilayered or multitiered structure. Such stepped gaskets are described in detail below.

The thermal interfaces and joints described above may also include one or more shims thereon. The one or more shims can be placed or located around, close to, and/or behind the one or more fasteners or fastener holes present on the plate(s). In some instances, where the one or more fasteners are potted inserts, the one or more shims can reduce stress on the potted inserts by at least about 10, 20, 30, 40, 50, 60, 70, 80, or 90%, as compared to an equivalent thermal interface without the one or more shims present. In some instances, the one or more shims have a height which is selected to be equal to the height of the first layer of stepped gasket. In some instances, the one or more shims are positioned as far behind the fastener holes and fasteners as possible, such as on the very edge of the plates. In some instances, the shims are made of a metal foil, preferably an aluminum or copper foil. In some other instances, the shims are made of a material selected from graphite, carbon fiber, silicone, thermoplastic elastomers, rubber, and acrylic. In still other instances, the shims are made of a multilayered or multitiered structure.

In some other instances, it is possible to counteract the effects of plate deformation, deflection, or curvature by including one or more shims in a thermal interface or joint having a single layer gasket therein. For example, a thermal interface or joint can include:

first and second plates;
a single layer gasket in between the first and second plates; and
one or more fasteners joining the first and the second plates;
wherein at least one of the first and/or the second plates exhibits plate deformation, deflection, or curvature;
wherein one or more shims are present around, close to, and/or behind the one or more fasteners to reduce and/or mitigate the deformation, deflection, or curvature of the first and/or the second plates.

Such thermal interfaces or joints having shims with a single layer gasket therein can be prepared according to a method including the steps of:

(1) providing first and second plates;
(2) providing a single layer gasket;
(3) placing the single layer gasket in between the first and the second plates;
(4) placing one or more shims in between the first and the second plates;
(5) joining the first and the second plates with one or more fasteners;

wherein at least one of the first and/or the second plates exhibits plate deformation, deflection, or curvature when joined by the one or more fasteners;
wherein one or more shims are present around, close to, and/or behind the one or more fasteners to reduce and/or mitigate the deformation, deflection, or curvature of the first and/or the second plates.

The thermal interfaces or joints described above can form part of a device. Such devices, include without limitation, personal computers, server computers, memory modules, graphics chips, radar and radio-frequency (RF) devices, disc drives, displays, including light-emitting diode (LED) displays, lighting systems, automotive control units, power-electronics, solar cells, batteries, communications equipment, such as cellular phones, thermoelectric generators, and imaging equipment, including MRIs.

In certain instances, the thermal interfaces or joints described throughout the specification are useful in low contact pressure and/or low pressure applications. Low pressure may refer to ambient pressure or pressures below 1 atm, such as in the range of about 0.01 to less than about 1 atm. In some instances, low pressure may refer to a vacuum, such as in aerospace applications, where such thermal interfaces or joints could be used in satellites or space vehicles/systems. Under vacuum conditions the thermal interfaces or joints are especially useful because unlike in atmospheric pressure applications where air in the separation gap between plates can contribute to heat transfer, the additional contact points enabled by the stepped gasket can substantially enhance area participating in heat transfer across the joint. Furthermore, the use of thick gaskets to make up contact in space applications can be problematic as the plate deformation that goes along with thick gaskets can result in stresses on potted inserts that can result in the inserts pulling out during the life of the spacecraft. In certain instances, the thermal interfaces or joints described are useful at temperatures which are below ambient temperature, below freezing, or at cryogenic temperatures (such as experienced in space).

## BRIEF DESCRIPTION OF THE DRAWINGS

Figure 1A is a non-limiting cross-sectional representational view of a thermal interface 100 having two plates 110 (top plate exhibiting plate deformation, deflection, or curvature), two fasteners 120 (i.e., bolts), and a thin single layer gasket 130 in between the plates.
Figure 1B is a non-limiting cross-sectional representational view of a thermal interface 200 having two plates 210 (top plate exhibiting plate deformation, deflection, or curvature), two fasteners 220 (i.e., bolts), and a thick single layer gasket 230 in between the plates.
Figure 2 is a non-limiting cross-sectional representational view of a thermal interface 300 having two plates 310 (top plate exhibiting plate deformation, deflection, or curvature), two fasteners 320 (i.e., bolts), a stepped gasket 330 (having three steps) in between the plates which provide a plurality of contact regions 340 between the stepped gasket to the top plate exhibiting plate deformation, deflection, or curvature.
Figure 3A is a non-limiting cross-sectional representational view of a stepped gasket having a first base layer 410 and a second layer 420 on the first base layer.
Figure 3B is a non-limiting cross-sectional representational view of a stepped gasket having a first base layer 510, a second layer 520 on the first base layer, and a third layer 530 on the second layer.
Figure 4 is a non-limiting top down representational view of a plate and gasket 600 having a bottom plate 610 with a plurality of fastener holes 620 and a stepped gasket having a first base layer 630, a second layer 640 on the first base layer, and a third layer 650 on the second layer.
Figure 5A is a non-limiting cross-sectional representational view of a thermal interface 700 having two plates 710 (top plate exhibiting plate deformation, deflection, or curvature), two fasteners 720 (i.e., bolts), a single layer gasket 730 having two shims 740 thereon.
Figure 5B is a non-limiting cross-sectional representational view of a thermal interface 800 having two plates 810 (top plate exhibiting plate deformation, deflection, or curvature), two fasteners 820 (i.e., bolts), a single layer gasket 830 and two shims 840 placed at the edge of the bottom plate.

Figure 6A is a non-limiting top down representational view of a plate and shims 900 having a bottom plate 910 with a plurality of fastener holes 940 and ¼ semi-annulus shims 920 and ½ semi-annulus shims 930 around, close to, and/or behind the fastener holes.

Figure 6B is a non-limiting top down representational view of a plate and shims 1000 having a bottom plate 1010 with a plurality of fastener holes 1030 and two rectangular shims 1020 behind the fastener holes.

Figure 7 is a graph of the experimental thermal conductance data as a function of applied contact pressure for gaskets of varying numbers of layers (1, 2, 3, and 4). Best-fit power law correlations were overlaid for each data set.

Figure 8 is a non-limiting representation of a 50 cm × 36 cm, 18 mm thick plate demonstrating a 22 bolt hole configuration.

Figure 9A shows a non-limiting top-down view of a stepped gasket having a base layer (grey) and a second layer thereon (black).

Figure 9B shows a non-limiting top-down view of a stepped gasket having a base layer (grey) and a second layer thereon (black).

Figure 9C shows a non-limiting top-down view of a stepped gasket having a base layer (grey) and a second layer thereon (black) which forms a strip-shape.

Figure 10 is a bar graph of temperature difference at the center of the plate for Samples 1-4, as tested in Example 2.

## DETAILED DESCRIPTION OF THE INVENTION

### I. Definitions

"Compliant" or "Compliance," as used herein, refers to the ability of a material to conform when contacted to one or more surfaces such that efficient conformance to the asperities of the adjoining surface results in sufficient or high contact areas at the interfaces between the surfaces and the material.

"Interdigitation" or "Interdigitating", as used herein, refers to the ability and or degree which one or more individual nanostructure elements of an array or sheet to infiltrate or penetrate into the adjacent nanostructure elements of another array or sheet when the two different arrays or sheets are contacted or stacked.

"Carbon Nanotube Array" or "CNT array" or "CNT forest", as used herein, refers to a plurality of carbon nanotubes which are vertically aligned on a surface of a material. Carbon nanotubes are said to be "vertically aligned" when they are substantially perpendicular to the surface on which they are supported or attached. Nanotubes are said to be substantially perpendicular when they are oriented on average within 30, 25, 20, 15, 10, or 5 degrees of the surface normal.

"Carbon Nanotube Sheet" or "CNT sheet", as used herein, refers to a plurality of carbon nanotubes which are aligned in plane to create a freestanding sheet. Carbon nanotubes are said to be "aligned in plane" when they are substantially parallel to the surface of the sheet that they form. Nanotubes are said to be substantially parallel when they are oriented on average greater than 40, 50, 60, 70, 80, or 85 degrees from sheet surface normal.

"Coating material" as used herein, generally refers to polymers and/or molecules that can bond to CNTs through van der Waals bonds, π-π stacking, mechanical wrapping and/or covalent bonds and bond to metal, metal oxide, or semiconductor material surfaces through van der Waals bonds, π-π stacking, and/or covalent bonds.

"Elastic recovery" as used herein, refers to the ability of a material to return to its original shape following compression, expansion, stretching, or other deformation.

"Compression set" as used herein, refers to the permanent deformation of a material which remains when a force, such as compression, was applied to the material and the force was subsequently removed.

"Plate deformation, deflection, or curvature," as used herein refers to any deformation, deflection, or curvature of a plate, as compared to its planar state, resulting from reactionary "normal" forces when a base plate of a thermal interface or joint and a compressible material, such as a gasket, produce a lever effect on a top plate, when the two plates are fastened (i.e., bolted) causing bending upwards around the fastener force(s). In some cases, deformation, deflection, or curvature of a plate may also arise during fabrication of the plate(s) from processes such as milling, casting, rolling or bonding.

"Fastener Spacing" or "Bolt Spacing," as used herein, refer to the distance between fasteners, such as bolts, which can include fasteners immediately next to each other or directly across from each other (on opposite edges of a plate).

"Shims" as used herein, refer to pieces of a material which can be placed around, close to (i.e., on the edge of), and/or behind, for example, the plurality of fastener holes on plates, such that they create a height or thickness mismatch between the shims and the surrounding area of an interface. The shims can produce a reactionary force behind the fasteners (i.e., bolts) which counteract the reactionary force of a gasket and plates, when fastened (i.e., bolted), which cause an initial deformation. The shims can increase the contacting area and push it further into the plate and away from the position of the fasteners.

Numerical ranges disclosed in the present application include, but are not limited to, ranges of temperatures, ranges of pressures, ranges of integers, ranges of conductance and resistance values, ranges of times, and ranges of thicknesses. The disclosed ranges of any type, disclose individually each possible number that such a range could reasonably encompass, as well as any sub-ranges and combinations of sub-ranges encompassed therein. For example, disclosure of a pressure range is intended to disclose individually every possible temperature value that such a range could encompass, consistent with the disclosure herein.

## II. Thermal Interfaces or Joints with Stepped Gaskets

Thermal interfaces or joints formed of at least two plates, which are fastened, such as by nuts and bolts, and a compressible material, such as a gasket, in between the plates. It is known that at least one of the plates is subject to undesirable plate deformation, deflection, or curvature.

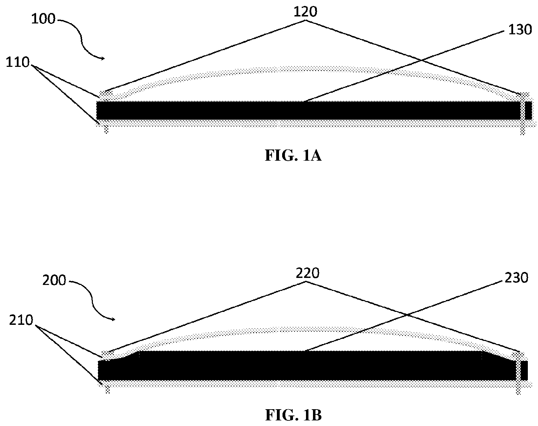

The inclusion of a gasket material between two bolted plates can in some instances lead to even further plate deformation, deflection, or curvature. Thinner gaskets can limit but not eliminate the extent of plate deformation, deflection, or curvature. As an example, Figure 1A shows a cross-sectional representational view of a thermal interface 100 having two plates 110, two fasteners 120 (i.e., bolts), and a thin single layer gasket 130 in between the plates where the top most plate exhibits plate deformation, deflection, or curvature. However, because the plate deformation, deflection, or curvature causes the plates to separate from the gasket, decreasing and/or negatively affecting the contact-dependent heat conducting ability of the thermal interface. Thus, in order to counteract the negative thermal penalty of plate deformation, deflection, or curvature one can increase gasket thickness uniformly to better conform to the plate deformation, deflection, or curvature and thereby provide an increase in the contact area. Thicker gaskets, however, can result in greater plate deformation, deflection, or curvature. For example, Figure 1B shows a cross-sectional representational view of a thermal interface 200 having two plates 210, two fasteners 220 (i.e., bolts), and a thick single layer gasket 230 in between the plates where the top most plate exhibits plate deformation, deflection, or curvature.

Plate deformation, deflection, or curvature increases and exhibits a maximum deflection at or near the fastener (i.e., bolt) locations. Plate deformation, deflection, or curvature can also be said to be at a maximum at or near the midpoint between opposing bolts. Thus, merely increasing thickness of the gasket will increase curvature and makes it difficult to make center contact consistently without resorting to extremely thick gaskets, which is not desirable or practical as a solution.

In thermal interfaces or joints, plate contact area with a gasket is proportional to plate thickness, plate elastic modulus, and fastener (i.e., bolt) torque. Plate contact area is inversely proportional to the distance between fasteners (i.e., bolts). In thermal interfaces or joints, plate deformation, deflection, or curvature is inversely proportional to plate thickness and plate elastic modulus. Plate deformation, deflection, or curvature is proportional to fastener (i.e., bolt) torque and monotonically increases with the distance between fasteners (i.e., bolts). In some instances, it is possible to model parameters, such the deflection, contact area, pressure, and thermal conductance for theoretical thermal interfaces. This enables selection of properties of the stepped gaskets discussed below to maximize properties of the thermal interface or joint, such as by increasing the contact regions/area between the stepped gasket and the plates and the thermal conductance overall.

As described herein, in order to address the issues resulting from plate deformation, deflection, or curvature, as discussed above, a thermal interface or joint may include:

first and second plates;
a stepped gasket in between the first and second plates; and
one or more fasteners joining the first and the second plates;
wherein at least one of the first and/or the second plates exhibits plate deformation, deflection, or curvature;
wherein the stepped gasket comprises a plurality of layers and there is at least a first base layer and at least a second layer, on top of and in contact with the first base layer, which has a surface area smaller than the surface area of the first base layer; and
wherein the at least second layer of the stepped gasket provides at least one or more contact regions with the at least one of the first and/or the second plates exhibiting plate deformation, deflection, or curvature, as compared to a single layer gasket that is not stepped.

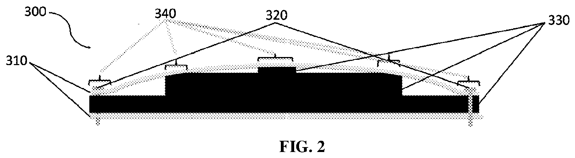

As shown in Figure 2, a cross-sectional representational view of a thermal interface 300 having two plates 310 (top plate exhibiting plate deformation, deflection, or curvature), two fasteners 320 (i.e., bolts), a stepped gasket 330 (having three steps) in between the plates provides a plurality of contact regions 340 between the stepped gasket and the top most plate exhibiting plate deformation, deflection, or curvature. The introduction of contact regions by use of a stepped gasket (versus a single layer gasket) counteracts the deleterious effect of the gap formed by plate deformation, deflection, or curvature.

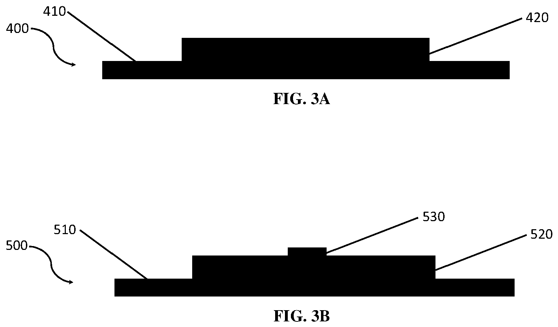

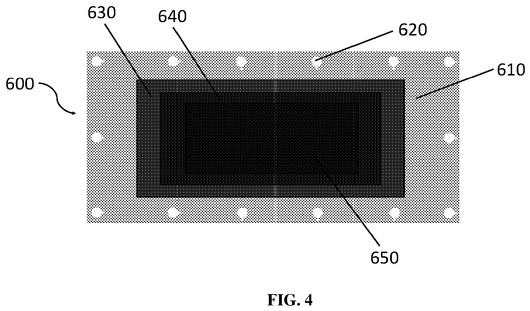

A stepped gasket has at least two layers, as shown in Figure 3A showing a cross-sectional representational view of a stepped gasket having a first base layer 410 and a second layer 420 on the first base layer. In some other instances, the stepped gasket has at least three layers, as shown in Figure 3B showing a cross-sectional representational view of a stepped gasket having a first base layer 510, a second layer 520 on the first base layer, and a third layer 530 on the second layer. Figure 4 shows an exemplary three layer gasket on a base plate. Stepped gaskets with additional layers up to 4 or 5 layers in total are also envisioned.

It is believed that each additional layer provides additional contact regions with the at least one of the first and/or the second plates exhibiting plate deformation, deflection, or curvature. Further, each layer is smaller than the layer below and has a surface area which is smaller than the surface area of the layer below.

The thermal interface or joint includes two plates, a base plate (bottom plate) and a top plate, which typically exhibits deformation, deflection, or curvature, either when the two plates are fastened (e.g., bolted) or during manufacture of the plates. Either the top or base (bottom) plate is planar or substantially planar (where "substantially planar" means less than 0.25 $\mu$m of out of flatness per mm of plate length). The top and bottom plates, such as shown in Figure 2, can be made of any suitable material, having any suitable shape and dimensions, and thickness for use as a thermal interface. The two plates are usually made of the same material, have the same shape and dimensions, and optionally the same thickness. In some instances, the first (bottom or base) and second (top) plates have a square, rectangular, circular, oval, or ring shape. Typically, the stepped gasket has the same overall shape, for at least the first base layer, as the first and second plates. In some instances, plates having a thickness of about >4 mm can be considered as highly rigid plates, whereas plates having a thickness of about <4 mm can be considered as moderately or lowly rigid plates. In some instances, the plates independently have a thickness ranging from about 0.5 to about 30 mm, about 0.5 to about 20 mm, or about 0.5 to about 10 mm, and sub-ranges within. In certain instances, both plates are ¼" thick plates.

In some instances, the first (bottom or base) and second (top) plates can be independently made of a material selected from aluminum, copper, steel, titanium, zinc, metal matrix composites (such as AlSiC or aluminum-graphite), and metal laminate structures (such as honeycomb panels or fiber metal laminates). In some instances, the first (bottom or base) and second (top) plates can be independently made of a plastic selected from acrylonitrile butadiene styrene, polycarbonate, nylon, epoxy, glass-reinforced epoxy laminate material (such as FR4), high-pressure fiberglass laminate (such as G10), fiberglass composites, PEEK, polyethylene, polyethylene terephthalate glycol, polypropylene, polyurethane, polyvinyl chloride, polyimide, polytetrafluoroethylene, polylactic acid, PEDOT:PSS (poly(3,4-ethylenedioxythiophene) polystyrene sulfonate), PARA, polyphenylene sulfide, polyamide-imide, and polyetherimide. In still other instances, the first (bottom or base) and second (top) plates can be independently made of a ceramic selected from alumina, aluminum nitride, zirconia, zirconia alumina, beryllium oxide, carbon fiber, graphite, silicon carbide, silicon dioxide, silicon nitride, $Y_2O_3$, TiC, $SrAl_2O_3$, ZrC, HfC, TaC, $ZrB_2$, $HfB_2$, $Mo_2B_5$, $MoSi_2$ TiN, YrN, co-fired ceramics (including high temperature co-fired ceramics (HTCC), low temperature co-fired ceramics (LTCC), ultra low temperature co-fired ceramics (ULTCC), including those consisting of phosphates, silicates, borates, molybdates, vanadates, tellurates and tungstates).

The top and bottom plates of the thermal interface or joint are fastened by one or more fasteners where the one or more fasteners join the first and the second plates through one or more holes present on the top and the bottom plates. There may be any number of the one or more fastener holes present on both plates in the same positions on each plate, as may be needed to allow for fasteners to join the two plates. In some instances, there are at least 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, or 32 fastener holes on each plate. The fastener holes present can have any shape or size as needed. In some instances, the fastener holes are circular and can have a diameter which is suitable to a fastener, such as a bolt. In some instances, the fastener holes may be threaded to receive a threaded fastener. The fastener holes may be spaced in any relative arrangement which is suitable. However, it is preferred in certain instances for the fastener holes to present at one or more edges of the plates. Typically, the fastener holes are evenly spaced on the plates. A non-limiting example of fastener holes on a plate and their relative positions to each other is shown in Figure 4. In some instances, spacing between fastener holes can be between two holes immediately next to each other and the distance can range from about 5 to 600 mm. In some instances, spacing between fastener holes can be between two holes on opposite edges of a plate and the distance can range from about 5 to 600 mm. In still other instances, spacing between fastener holes can be between two holes which are diagonally located from one another on a plate and the distance can range from about 5 to 600 mm.

One or more fasteners can be used to fasten the first (base or bottom) plate and second (top) plates through each of the fastener holes which may be present. The one or more fasteners can be selected from threaded fasteners, clamps, clips, push pins, rivets, a pneumatic press, a hydraulic press, or combinations thereof. Such fasteners are known in the art. The threaded fasteners can be bolts and nuts, such as those known in the art. In some other inserts the threaded fasteners are bolts and potted inserts, such as those known in the art. The one or more fasteners of any kind used can be made of any suitable material, such as a material selected from steel, titanium, aluminum, nylon, brass, bronze, and zinc. In instances where the fasteners include bolts the bolts may be applied using a suitable amount of bolt torque and the bolts may be tightened in any suitable tightening pattern to ensure uniform fastening between the two plates. Selection of suitable bolts (and nuts), bolting torques, and bolting patterns are known in the art.

In some instances, for the thermal interfaces and joints described the at least one or more additional contact regions provided by use of a stepped gasket provides an increase in temperature uniformity of the first and/or second plates exhibiting plate deformation, deflection, or curvature thereby providing an average thermal conductance across the thermal interface at least 25% higher, 30% higher, 40% higher, or 50% higher than that of the same thermal interface with a single layer gasket that is not stepped therein. The thermal conductance is defined as the time rate of steady state heat flow through a unit area of the thermal interface or joint induced by a unit temperature difference between the thermal interface surfaces.

In certain instances, for the thermal interfaces and joints described the at least one or more additional contact regions provided by use of a stepped gasket provides an increase in contact area between the stepped gasket and the at least one of the first and/or the second plates exhibiting plate deformation, deflection, or curvature thereby providing an average thermal conductance across the thermal interface at least 25% higher, 30% higher, 40% higher, or 50% higher than that of the same thermal interface with a single layer gasket that is not stepped therein. The thermal conductance is defined as the time rate of steady state heat flow through a unit area of the thermal interface or joint induced by a unit temperature difference between the thermal interface surfaces.

For the thermal interfaces and joints described each layer of the stepped gasket, as may be present, conforms to a surface of the at least one of the first and/or the second plates exhibiting plate deformation, deflection, or curvature at least at one or more contact regions.

### A. Stepped Gaskets

The use of stepped gaskets introduces one or more contact regions or areas between the stepped gasket and the plate exhibiting deformation or curvature (*see* Figure 2), as compared to use of a single layer gasket. Stepped gaskets can be designed to match or modify (improve) the thermal profile of the plates. Stepped gaskets can distribute contact loads more evenly for better overall uniformity. The number of layers of a stepped gasket (*see* Figures 3 and 4) and relative location of layers present in a stepped gasket can be positioned based on interface curvature modeling to properly position or produce a desired number of contact points or regions which improve the thermal performance of the thermal interface or joint.

The stepped gaskets include a first base layer and at least a second layer thereon. Additional layers, such as a third, fourth, or fifth layer may be included. The first base layer and the other layers can have any suitable shape or thickness, as needed. More typically, the first base layer and the other layers have the same shape (i.e., square, rectangular, circular, regular or irregular shaped, etc.). In some instances, the stepped gasket has a first base layer has dimensions which covers the full area of the plates in between which it is placed. In some other instances, the stepped gasket has a first base layer has dimensions which are smaller than the full area of the plates in between which it is placed, such as to cover at least about 50%, 60%, 70%, 80%, 90% of the area of the plates. The first base layer of the stepped gasket may include hole cut outs to accommodate the fastening holes present on the plates. Each subsequent layer is smaller in size (area) than the layer below it. In some instances, the layer atop has an area between about 1% to 50% the size of the area of the layer below it. For example, the second layer may have an area of about 1% to 75% or about 1% to 50% of the area of the first base layer and the third layer, if present, may be about 1% to 75% or about 1% to 50% smaller in area size than that of the second layer. The same is applicable to additional layers relative to the layer on which they are present on.

The use of stepped gaskets provides at least one or more contact regions with the at least one of the first and/or the second plates exhibiting plate deformation, deflection, or curvature, as compared to use of a single layer gasket that is not stepped. For a given stepped gasket each layer included may provide at least one, two, three, or four independent contact regions to the at least one of the first and/or the second plates exhibiting plate deformation, deflection, or curvature, as compared to a gasket without that layer. In some instances, the one or more contact regions resulting from use of a stepped gaskets can be said to contact at least about 5%, 10%, 20%, 30%, 40%, 50%, 60%, 70%, 80%, or 90% of the surface of the at least one of the first and/or the second plates exhibiting plate deformation, deflection, or curvature. In some instances, the one or more contact regions resulting from use of a stepped gaskets can be said to contact at least about 5% to 25%, about 5% to 50%, about 5% to 75%, or about 5% to 90%, and sub-ranges within, of the surface of the at least one of the first and/or the second plates exhibiting plate deformation, deflection, or curvature. The formation of one or more contact regions and resulting increase in contact area between the gasket and plates provides an increase in the overall thermal conductivity of the thermal interface or joint.

In some instances, the maximum deflection/deformation height of fastened plates can be determined or simulated which allows for formation of a stepped gasket having a combined height (i.e., sum of all layers which may be present) which meets or exceeds, preferably, the maximum deflection/ deformation height of fastened plates. In some cases, each of the layers of the stepped gasket, as may be present, can each independently have a thickness in a range of

between about 50 $\mu$m and about 500 $\mu$m. Moreover, in some cases, the increase in height in between layers of the stepped gasket is selected to be less than about 500 $\mu$m, less than about 250 $\mu$m, less than about 150 $\mu$m, or less than about 75 $\mu$m. In some instances, the increase in the height in between layers of the stepped gasket can be determined based on the theoretical deflection from the contacting surface under fastener load, as predicted by using Euler-Bernoulli beam theory, Timoshenko beam theory, or Kirchhoff-Love plate theory while considering the gasket layers as a compressible and elastic foundation.

In certain cases, the location of the perimeter of the second layer of the stepped gasket is selected and sized in order to intersect with the theoretical deflection of the contacting surface under fastener load, as predicted by the Euler-Bernoulli beam theory, Timoshenko beam theory, or Kirchhoff-Love plate theory, while considering the gaskets as a compressible and elastic foundation, and considering the deformation of the first layer of the stepped gasket near the fasteners. In some instances, the location of the perimeter of the third layer of the stepped gasket, when present, is sized to intersect with the theoretical deflection of the contacting surface under fastener load, as predicted by the Euler-Bernoulli beam theory, Timoshenko beam theory, or Kirchhoff-Love plate theory, considering the deformation of the first layer of the stepped gasket near the fasteners and the deformation of the first and second layers in the area, where the second layer contacts the second surface. In still other instances, the location of the perimeter of the fourth layer of the stepped gasket, when present, is sized to intersect with the theoretical deflection of the contacting surface under fastener load, as predicted by the Euler-Bernoulli beam theory, Timoshenko beam theory, or Kirchhoff-Love plate theory, considering the deformation of the first layer of the stepped gasket near the fasteners, the deformation of the first and second layers in the area where the second layer contacts the second surface, and the deformation of the first, second, and third layers, in the area where the third layer contacts the second surface.

In some instances, additional layers may be on top of each prior layer (i.e., second layer on first base layer, third layer on second layer, etc.). Additionally or alternatively, additional layers may be next to each other over a prior layer, such as a first base layer having a second and third layer on the base layer next to each other but where the third layer is not in contact or over the second layer.

In some instances, each of the layers of the stepped gasket, as may be present, can each independently demonstrate a modulus of elasticity in a range between about 0.1 MPa to about 50 MPa, about 0.1 MPa to about 100 MPa, about 0.1 MPa to about 150 MPa, or about 0.1 MPa to about 200 MPa. In some instances, each of the layers of the stepped gasket, as may be present, can each independently have a thermal interface resistance in a range between about 0.05 $cm^2$-$^0$C/W to about 1 $cm^2$-$^0$C/W, 0.05 $cm^2$-$^0$C/W to about 5 $cm^2$-$^0$C/W, 0.05 $cm^2$-$^0$C/W to about 2 $cm^2$-$^0$C/W, 0.05 $cm^2$-$^0$C/W to about 3 $cm^2$-$^0$C/W, 0.05 $cm^2$-$^0$C/W to about 4 $cm^2$-$^0$C/W, or 0.05 $cm^2$-$^{\circ}$C/W to about 5 $cm^2$-$^0$C/W.

In some instances, each of the plurality of layers of the stepped gasket is independently made of a material selected from graphite, carbon fiber, silicone, thermoplastic elastomers, rubber, and acrylic. Typically, each stepped gasket having at least two layers is made of layers made of identical materials where the number of layers and thickness of each may be varied, as appropriate. In some instances, layers of different material types could be used. In still some instances, the material making up each layer of stepped gasket can further include thermally and/or electrically conductive fillers, which are known in the art.

In some cases, the first base layer of the stepped gasket provides an electrical grounding path through the stepped gasket, preferably near the one or more fasteners. In still other cases, the first base layer can include an adhesive (i.e., a pressure adhesive or thermal adhesive), preferably on the side which does not have any additional layers thereon. For example, the adhesive may be present on the bottom of the first base layer shown on Figures 2, 3A, or 3B to allow adhesion to the bottom (base) plate.

In some instances, stepped gasket can be made of multilayered or multitiered structures containing carbon nanotube arrays or sheets. For example, the stepped gasket can be a multilayered or multitiered structure containing:

at least a first layer or tier comprising a carbon nanotube array comprising vertically aligned carbon nanotubes grown from opposing surfaces of a first planar substrate, and
at least a second layer or tier comprising a carbon nanotube array comprising vertically aligned carbon nanotubes grown from opposing surfaces of a second planar substrate,
wherein the at least first layer or tier and the at least second layer or tier are stacked and the vertically aligned carbon nanotubes of the at least first layer or tier at least partially interdigitate the vertically aligned carbon nanotubes of the at least second layer or tier which are interfacing each other. Such stepped gaskets are described in detail below.

### i. Stepped Gaskets with Multilayered or Multitiered Structures

Multilayered or multitiered structures containing carbon nanotube arrays or sheets can be used to form stepped gaskets, as described below.

**a. Carbon Nanotube Arrays and Carbon Nanotube Sheets**

Carbon nanotube (CNT) arrays are described herein. Arrays contain a plurality of carbon nanotubes supported on, or attached to, the surface of an inert substrate/support, such as made of a metallic (e.g., Al or Au) foil or of metal alloys (*i.e.,* steel). In some embodiments, the substrate/support can be a flexible, electrically, and thermally conductive substrate, such as graphite or other carbon-based material. In yet other embodiments, the substrate/support can be an electrically insulating substrate such as a flexible ceramic. The CNT arrays can be formed using the methods described below. The CNTs are vertically aligned on the substrate/support. CNTs are said to be "vertically aligned" when they are substantially perpendicular to the surface on which they are supported or attached. Nanotubes are said to be substantially perpendicular when they are oriented on average within 30, 25, 20, 15, 10, or 5 degrees of the surface normal.

Generally, the carbon nanotubes are present at a sufficient density such that the nanotubes are self-supporting and adopt a substantially perpendicular orientation to the surface of the multilayer substrate. Preferably, the nanotubes are spaced at optimal distances from one another and are of uniform height to minimize thermal transfer losses, thereby maximizing their collective thermal diffusivity. Carbon nanotube density on the substrate surface may range from about $1 \times 10^7$ to $1 \times 10^{11}$ nanotubes per $mm^2$, from about $1 \times 10^8$ to $1 \times 10^{10}$ nanotubes per $mm^2$, or from about $1 \times 10^9$ to $1 \times 10^{10}$ nanotubes per $mm^2$.

The CNT arrays contain nanotubes which are continuous from the top of the array (*i.e.,* the surface formed by the distal end of the carbon nanotubes when vertically aligned on the multilayer substrate) to bottom of the array (*i.e.,* the surface of the multilayer substrate). The CNT array may be formed from multi-wall carbon nanotubes (MWNTs), which generally refers to nanotubes having between approximately 4 and approximately 10 walls. The array may also be formed from few-wall nanotubes (FWNTs), which generally refer to nanotubes containing approximately 1-3 walls. FWNTs include single-wall carbon nanotubes (SWNTs), double-wall carbon nanotubes (DWNTS), and triple-wall carbon nanotubes (TWNTs Nanotubes can be MWNTs. The diameter of MWNTs in array ranges from 10 to 40 nm, more preferably 15 to 30 nm, most preferably about 20 nm. The length of CNTs in the arrays can range from 1 to 5,000 micrometers, preferably 5 to 5000 micrometers, preferably 5 to 2500 micrometers, more preferably 5 to 2000 micrometers, more preferably 5 to 1000 micrometers. The length of CNTs in the arrays can range from 1-500 micrometers, even more preferably 1-100 micrometers.

The CNTs display strong adhesion to the multilayer substrate. A CNT array or sheet may remain substantially intact after being immersed in a solvent, such as ethanol, and sonicated for a period of at least five minutes. At least about 90%, 95%, 96%, 97%, 98%, 99%, or 99.9% of the CNTs may remain on the surface after sonication in ethanol.

Carbon nanotube sheets are also described herein. The sheets contain a plurality of carbon nanotubes that support each other through strong van der Waals force interactions and mechanical entanglement to form a freestanding material. The CNT sheets can be formed using the methods described below. The CNTs form a freestanding sheet and are aligned in plane with the surface of this sheet. CNTs are said to be "aligned in plane" when they are substantially parallel to the surface of the sheet that they form. Nanotubes are said to be substantially parallel when they are oriented on average greater than 40, 50, 60, 70, 80, or 85 degrees from sheet surface normal.

Generally, the nanotubes are present at a sufficient density such that the nanotubes are self-supporting and adopt a substantially parallel orientation to the surface of the sheet. Preferably, the nanotubes are spaced at optimal distances from one another and are of uniform length to minimize thermal transfer losses, thereby maximizing their collective thermal diffusivity.

The CNT sheets may be formed from multi-wall carbon nanotubes (MWNTs), which generally refers to nanotubes having between approximately 4 and approximately 10 walls. The sheets may also be formed from few-wall nanotubes (FWNTs), which generally refers to nanotubes containing approximately 1-3 walls. FWNTs include single-wall carbon nanotubes (SWNTs), double-wall carbon nanotubes (DWNTS), and triple-wall carbon nanotubes (TWNTs). Nanotubes may be MWNTs. The diameter of MWNTs in arrays may range from 10 to 40 nm, more preferably 15 to 30 nm, most preferably about 20 nm. The length of CNTs in the sheets can range from 1 to 5,000 micrometers, preferably 100 to 5000 micrometers, preferably 500 to 5000 micrometers, more preferably 1000 to 5000 micrometers. The length of CNTs in the sheets can range from 1-500 micrometers, even more preferably 1-100 micrometers.

The CNT arrays or sheets, as described above, can include a coating or coating material (terms can be used interchangeably) which adheres or is bonded to the CNTs therein. The coating/coating material can be applied as described below. A coating may contain one or more oligomeric materials, polymeric materials, waxes, or combinations thereof. A coating may contain one or more non-polymeric materials. A coating can contain a mixture of oligomeric, waxes, and/or polymeric material and non-polymeric materials.

Coating material(s) may act as a bonding agent(s) which can bonded, such as chemically, the carbon nanotubes of the stacked arrays or sheets. Without limitation, such coating material(s) which can act as bonding agents(s) can be selected from adhesives (*i.e.,* acrylate adhesives) and a phase change material (*i.e.,* a wax or waxes).

A coating which can adhere or is bonded to the CNTs of an array may be applied before two or more CNT arrays or sheets are stacked while in other instances, a coating which adheres or is bonded to the CNTs of an array is applied following stacking of two or more CNT arrays or sheets. A coating may be infiltrated or backfilled into multilayered or multitiered structures formed by stacking CNT arrays or sheets and adheres or is bonded to the CNTs of the arrays forming the structure. As used herein, "infiltration" or "infiltrated" refer to a coating material(s) which are permeated through at least some of the carbon nanotubes of the arrays or sheets which were stacked to form the multilayered or multitiered structures. The extent of infiltration may be in the range of 0.1-99.9% of the volume space between the carbon nanotubes of the arrays or sheets. An infiltrated coating material may at least partially fill the interstitial space between carbon nanotubes while in some other instances the infiltrated coating coats at least some of the surface(s) of the carbon nanotubes, or both. An infiltrated coating material may fill all or substantially all (*i.e.,* at least about 95%, 96%, 97%, 98%, or 99%) of the interstitial space between carbon nanotubes present in the tiers or layers of the structure formed by stacking of the CNT arrays or sheets.

A variety of materials can be coated onto the CNT arrays or sheets, prior to stacking, during stacking, or following stacking. Coatings can cause a decrease in the thermal resistance of the CNTs of arrays or sheets of structure having a plurality of layers or tiers, as defined herein. The coatings can be applied conformally to coat the tips and/or sidewalls of the CNTs. It is also desirable that the coating be reflowable as the interface is assembled using, for example, solvent, heat or some other easy to apply source. Polymers used as coatings must be thermally stable up to at least 130°C. A coating may be readily removable, such as by heat or dissolution in a solvent, to allow for "reworking" of the interface. "Reworking", as used herein, refers to breaking the interface (*i.e.,* removing the coating) by applying solvent or heat.

A coating may be, or may contain, one or more polymeric materials. The polymer or polymeric coating can contain a conjugated polymer, such as an aromatic, heteroaromatic, or non-aromatic polymer, or a non-conjugated polymer.

Suitable classes of conjugated polymers include polyaromatic and polyheteroaromatics including, but not limited to, polythiophenes (including alkyl-substituted polythiophenes), polystyrenes, polypyrroles, polyacetylenes, polyanilines, polyfluorenes, polyphenylenes, polypyrenes, polyazulenes, polynaphthalenes, polycarbazoles, polyindoles, polyazepines, poly(3,4-ethylenedioxythiophenes), poly(p-phenyl sulfides), and poly(p-phenylene vinylene). Suitable non-aromatic, conjugated polymers include, but are not limited to, polyacetylenes and polydiacetylenes. The polymer classes listed \above include substituted polymers, wherein the polymer backbone is substituted with one or more functional groups, such as alkyl groups. A polymer may be polystyrene (PS). A polymer may be poly(3-hexythiophene) (P3HT). A polymer may be poly(3,4-3thylenedioxythiophene) (PEDOT) or poly(3,4-3thylenedioxythiophene) poly(styrenesulfonate) (PEDOT:PSS).

A polymer may be a non-conjugated polymer. Suitable non-conjugated include, but are not limited to, polyvinyl alcohols (PVA), poly(methyl methacrylates) (PMMA), polydimethylsiloxanes (PDMS), polyurethane, silicones, acrylics, and combinations (blends) thereof.

A polymer may be a paraffin wax. A polymer may be a synthetic wax such as Fischer-Tropsch waxes or polyethylene waxes. A polymer may be a wax that has a melting temperature above 80, 90, 100, 110, or 120 °C, preferably above 130 °C.

A polymer may be an adhesive, such as, but not limited to, a hot glue or hot melt adhesive that combines wax, tackifiers and a polymer base to provide improved adhesion properties to one or more surfaces. An adhesive may be a pressure sensitive adhesive. An adhesive may be a monomer that polymerizes upon contact with air or water such as a cyanoacrylate. An adhesive may be a combination of a pressure sensitive adhesive and a thermally activated (or activatable) adhesive polymers which enhances ease of adhesion of a multilayered or multitiered structure described herein which includes such a combination of coatings to a surface(s), by way of the pressure sensitive adhesive and additional and more permanent or semi-permanent adhesion by way of the thermal adhesive.

The CNT arrays or sheets can additionally be coated with one or more metal nanoparticles. One or more metal nanoparticles may be adsorbed to the distal ends and/or sidewalls of the CNTs to bond the distal ends and/or sidewalls of the CNTs to a surface, reduce thermal resistance between the CNT array or sheet and a surface, or combinations thereof. Metal nanoparticles can be applied to CNT arrays or sheets using a variety of methods known in the art. Examples of suitable metal nanoparticles include palladium, gold, silver, titanium, iron, nickel, copper, and combinations thereof.

### a1. Flowable or Phase Change Materials

Flowable or phase change materials may be applied to CNT arrays or sheets described above prior to stacking, during stacking, or following stacking. Flowable or phase change materials may be added to the CNT array or sheet to displace the air between CNTs and improve contact between the distal ends and/or sidewalls of CNTs and a surface, and as a result reduce thermal resistance of the array or sheet and the contact between the array or sheet and a surface, or combinations thereof. Flowable or phase change materials can be applied to CNT arrays using a variety of methods known in the art.

Examples of suitable flowable or phase change materials include paraffin waxes, polyethylene waxes, hydrocarbon-based waxes in general, and blends thereof. Other examples of suitable flowable or phase change materials that are neither wax nor polymeric include liquid metals, oils, organic-inorganic and inorganic-inorganic eutectics, and blends thereof. A coating material, such as a non-polymeric coating material and the flowable or phase change material may be the same material or materials.

## b. Stacked CNT Arrays or Sheets

The CNT arrays or sheets described above are stacked according to the methods described below to afford stepped gaskets which represent multilayered or multitiered structures. In some instances, a stepped gasket is formed by contacting/stacking the carbon nanotubes of two CNT arrays or sheets, which interdigitate at least partially, and which may optionally be coated with a suitable coating material as described herein. In some other instances, each layer of a stepped gasket may be formed from multiple CNT arrays or sheets which are stacked. For example, a base layer may include a multilayered or multitiered structure formed of at least two CNT arrays or sheets which are stacked, a second smaller layer atop the first base layer may also be a multilayered or multitiered structure formed of at least two or CNT arrays or sheets, and an optional third even smaller layer atop the second layer may also be a multilayered or multitiered structure formed of at least two or CNT arrays or sheets. By including more CNT arrays or sheets, the thickness of each of the layers formed of the multilayered or multitiered structures can be modified, as needed. In still other instances, a layer of the stepped gasket may be formed from multiple CNT arrays or sheets which are stacked and a layer atop may be formed of a single CNT array or sheet, which forms a layer by itself. Such combinations of layer types are envisioned.

Multilayered or multitiered structures can further include a coating, a coating of metallic nanoparticles, and/or a coating of flowable or phase change materials on the nanostructure elements, such as CNTs, of the arrays. Such a coating, a coating of metallic nanoparticles, and/or a coating of flowable or phase change materials are as described above.

In some instances, the stepped gaskets contain least two CNT arrays or sheets which are stacked and form a multilayered or multitiered structure. By including more CNT arrays or sheets, the thickness of the multilayered or multitiered stepped gaskets can be increased, as needed. Up to 3, 4, 5, 10, 15, 20, 25, 30, or more CNT arrays or sheets can be stacked according to the methods described below. For example, a stepped gasket having at least two layers can be formed by stacking two CNT arrays or sheets. A stepped gasket having at least three layers can be formed by stacking three CNT arrays or sheets. It is further understood that one CNT array or sheet acts as a first base layer. A second CNT array or sheet is stacked over the first base layer and is smaller in size and has a smaller surface area than the base layer, such as in Figure 3A. In some instances, a third CNT array or sheet can stacked over the second layer and is smaller in size and has a smaller surface area than the second layer, such as in Figure 3B. In some instances, the layer atop has an area between about 1% to 50% the size of the area of the layer below it. For example, the second layer may have an area of about 1% to 75% or about 1% to 50% of the area of the first base layer and the third layer, if present, may be about 1% to 75% or about 1% to 50% smaller in area size than that of the second layer. The same is applicable to additional layers relative to the layer on which they are present on.

The first base layer and the other layers made of CNT arrays or sheets can have the same shape (i.e., square, rectangular, circular, regular or irregular shaped, etc.). The first base layer of the stepped gasket may include hole cut outs to accommodate the fastening holes present on the plates

In a non-limiting embodiment, at least two vertically aligned arrays or sheets formed on supports/substrates are stacked/contacted such that the nanostructure elements, such as CNTs, of the arrays at least partially interdigitate on contact. In one embodiment, full interdigitation of nanostructure elements of the arrays occurs within one another when stacked. In other embodiments the arrays may interdigitate only at the tips of the nanostructure elements, such as CNTs. In yet other embodiments, the individual nanostructures can navigate through the nanostructures of the adjacent array during the interdigitating process and the nanostructure elements of the individual arrays, such as the CNTs or some portion thereof, fully or substantially interdigitate within one another; "substantially," as used herein, refers to at least 95%, 96%, 97%, 98%, or 99% interdigitation between the nanostructure elements of the individual arrays. In some embodiments, the extent of interdigitation is in the range of about 0.1% to 99% or at least about 1%, 5%, 10%, 20%, 30%, 40%, 50%, 60%, 70%, 80%, 90%, or 95%.

In some embodiments the nanostructures of the stacked CNT arrays or sheets, which interdigitate at least partially, may also form into larger superstructures, such as, but not limited to, tube bundles, clumps, or rows. These superstructures may be formed through mechanisms such as capillary clumping or by way of application of a polymer coating prior to, during, or following the stacking process.

A polymer coating and/or adhesive, or other coating as described above, may be applied to the CNT array(s) which are subsequently stacked. The thickness of the coating and/or adhesive, or other coating as described above, is about 1-1000 nm, more preferable 1-500 nm, and most preferably 1-100 nm.

In addition to the above, the favorable deformation mechanics of CNTs present in the multilayered or multitiered structures allow them to efficiently conform to the asperities of adjoining surfaces, resulting in high contact areas at interfaces.

**b1. Reduction in thermal resistance**

The stepped gaskets formed by stacking of CNT arrays or sheets described herein exhibit reduced interface thermal resistance. The thermal resistance can be measured using a variety of techniques known in the art, such as the guarded hot plate method.

The thermal resistance of the multilayered or multitiered structures formed by stacking of such CNT arrays or sheets is reduced by at least about 25%, 30%, 35%, 40%, 45%, 50%, 55%, 60%, 65%, 70% or greater compared to single tiered structures when measured, for example, using a bolted joint, outfitted with thermocouples on the hot and cold sides of the joint. CNT arrays or sheets and the multilayered or multitiered structures formed by stacking of such CNT arrays or sheets may exhibit thermal resistances of less than about 1.0, 0.9, 0.8, 0.7, 0.6, 0.5, 0.4, 0.3, 0.2, or 0.1 $cm^2$ K/W. The thermal resistance may be about 0.4, preferably about 0.3 $cm^2$ K/W. These thermal resistances are as measured locally using a method, such as that described in ASTM D-5470. The composite thermal resistance of an actual thermal interface or part thereof depends on the actual part geometry and materials and could fall outside this range. CNT arrays or sheets and the multilayered or multitiered structures formed by stacking of such CNT arrays or sheets may exhibit thermal resistances of between about 2.0 and 0.1 $cm^2$ K/W. The thermal resistance may be about 2, 1.5, 1, 0.9, 0.8, 0.7, 0.6, 0.5, 0.4, 0.3, 0.2, or 0.1 $cm^2$ K/W. The thermal resistance value of a multilayered or multitiered structures formed by stacking of CNT arrays or sheets may be the same or substantially unchanged as compared to the value(s) of the single layer arrays used to form the stack; "substantially," as used herein refers to less than a 10%, 5%, 4%, 3%, 2%, or 1% change.

In one instance, the apparent thermal conductivity of the multilayered or multitiered structures formed by stacking CNT arrays or sheets, and which form stepped gaskets, is increased by at least about 25%, 30%, 35%, 40%, 45%, 50%, 55%, 60%, 65%, 70% or greater compared to single tiered structures. Multilayered or multitiered gasket structures exhibit conductivity values in the range of about 1-2500 W/m-K, 1-2000 W/m-K, 1-1500 W/m-K, 1-1000 W/m-K, 1-500 W/m-K, 5-500 W/m-K, 5-400 W/m-K, 5-300 W/m-K, 5-200 W/m-K, 5-150 W/m-K, 5-100 W/m·K, or 3-30 W/m-K.

In some cases, a coating may be optionally applied to the CNT arrays or sheets prior to, during, or following stacking to form multilayered or multitiered structures formed by stacking of such CNT arrays or sheets. Coating(s) were shown to be an effective means for increasing the contact area and reducing the thermal resistance of CNT forest thermal interfaces. The bonding process added by inclusion of nanoscale coatings around individual CNT contacts includes, for example, pulling, through capillary action, of additional CNTs close to the interface to increase contact area.

In some instances, the multilayered or multitiered structures can demonstrate excellent elastic recovery properties following one or more repeated deformations, typically compressions, at varying pressures up to about 30, 50, 100, 200, 300, 400, 500 psi, or greater, wherein 1 psi is 6.89476 kPa. Elastic recovery of the multilayered or multitiered structures, expressed as a percentage value, following one or more compressions can be greater than about 50%, 60%, 70%, 80%, 90%, 91%, 92%, 93%, 94%, 95%, 96%, 97%, 98%, or 99%. In some instances, the multilayered or multitiered structures described also demonstrate compression set properties following one or more repeated deformations, typically compressions, at varying pressures up to about 30, 50, 100, 200, 300, 400, 500 psi, or greater. Compression set of the multilayered or multitiered structures, expressed as a percentage value, following one or more compressions can be less than about 20%, 15%, 10%, 9%, 8%, 7%, 6%, 5%, 4%, 3%, 2%, 1%, 0.9%, 0.8%, 0.7%, 0.6%, 0.5%, 0.4%, 0.3%, 0.2%, or 0.1%.

**ii. Shims**

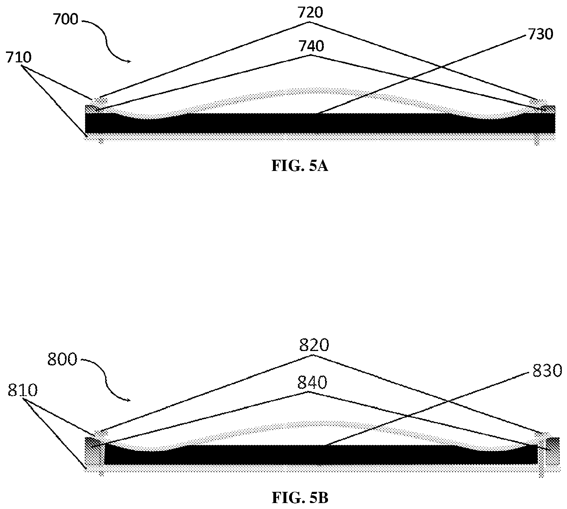

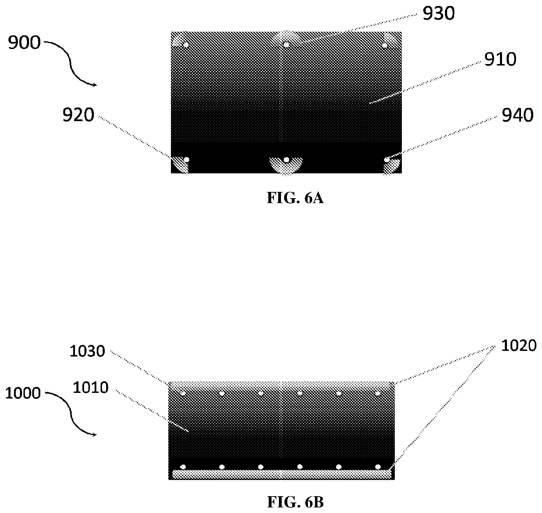

The thermal interfaces and joints described above may also include one or more shims thereon, such as shown in Figures 5A, 5B, 6A, and 6B. As shown in Figure 5A, the shims may be placed on top of the stepped gasket. Or, the shims may be placed in such a way that they are not in contact with the stepped gasket, as shown in Figure 5B.

The one or more shims can be placed or located around, close to, and/or behind the one or more fasteners or fastener holes present on the plate(s), as shown in Figures 6A and 6B. In some instances, the one or more shims have a height which is selected to be equal to the height of the first layer of stepped gasket. In some instances, the one or more shims are positioned as far behind the fastener holes and fasteners as possible, such as on the very edge of the plates.

The shims can have any suitable shape. In some instances, the one or more shims preferably have an annulus or semi-annulus shape, which may be circular, square, or rectangular. Such semi-annulus shaped shims can be ¼, ½, 1/3, or ¾ semi-annulus shaped shims. Additionally or alternatively, shims having a square or rectangular shape can be used which are placed or located around, close to, and/or behind to at least one corner, edge, and/or center of the first and/or the second plates, as shown in Figure 6B.

In some instances, the shims are made of a metal foil, preferably an aluminum or copper foil. In some other instances, the shims are made of a material selected from graphite, carbon fiber, silicone, thermoplastic elastomers, rubber, and acrylic.

In still other instances, the shims are made of a multilayered or multitiered structure comprising:

at least a first layer or tier comprising a carbon nanotube array comprising vertically aligned carbon nanotubes grown from opposing surfaces of a first planar substrate, and

at least a second layer or tier comprising a carbon nanotube array comprising vertically aligned carbon nanotubes grown from opposing surfaces of a second planar substrate,

wherein the at least first layer or tier and the at least second layer or tier are stacked and the vertically aligned carbon nanotubes of the at least first layer or tier at least partially interdigitate the vertically aligned carbon nanotubes of the at least second layer or tier which are interfacing each other. Such multilayered or multitiered structures, and their methods of making, are as described above and in Section VI below.

The one or more shims independently can have any suitable range. In some instances, the shims have a thickness in a range of between about 25 $\mu$m and about 500 $\mu$m. In some instances, the shims each independently demonstrate a modulus of elasticity in a range between about 5 MPa to about 130 GPa.

### III. Thermal Interfaces or Joints including Shims

As explained, thermal interfaces or joints formed of at least two plates, which are fastened, such as by nuts and bolts, and have a compressible material, such as a gasket, in between the plates have at least one plate which is subject to undesirable plate deformation, deflection, or curvature. Because such plate deformation, deflection, or curvature can cause formation of gap(s) which decrease and/or limit the contact area between the plates and gasket it produces a negative impact on the ability of the thermal interface to conduct heat efficiently.

In some instances, it is possible to counteract the effects of plate deformation, deflection, or curvature by including one or more shims in a thermal interface or joint having a single layer gasket therein.

In order to address the issues resulting from plate deformation, deflection, or curvature, a thermal interface or joint can include:

first and second plates;
a single layer gasket in between the first and second plates; and
one or more fasteners joining the first and the second plates;
wherein at least one of the first and/or the second plates exhibits plate deformation, deflection, or curvature;
wherein one or more shims are present around, close to, and/or behind the one or more fasteners to reduce and/or mitigate the deformation, deflection, or curvature of the first and/or the second plates.

The thermal interface or joint includes two plates, a base plate (bottom plate) and a top plate, one or both of which typically exhibit deformation, deflection, or curvature, when the two plates are fastened (i.e., bolted). At least one of the plates is planar or substantially planar (where "substantially planar" means less than 0.25 um of out of flatness per mm of plate length). The top and bottom plates, such as shown in Figure 2, can be made of any suitable material, having any suitable shape and dimensions, and thickness for use as a thermal interface. The two plates are usually made of the same material, have the same shape and dimensions, and optionally the same thickness. In some instances, the first (bottom or base) and second (top) plates have a square, rectangular, circular, oval, or ring shape. Typically, the single layer gasket has the same overall shape, for at least the first base layer, as the first and second plates. In some instances, plates having a thickness of about >4 mm can be considered as highly rigid plates, whereas plates having a thickness of about <4 mm can be considered as moderately or lowly rigid plates. In some instances, the plates independently have a thickness ranging from about 0.5 to about 30 mm, about 0.5 to about 20 mm, or about 0.5 to about 10 mm, and sub-ranges within. In certain instances, both plates are ¼" thick plates.

In some instances, the first (bottom or base) and second (top) plates can be independently made of a material selected from aluminum, copper, steel, titanium, zinc, metal matrix composites (such as AlSiC or aluminum-graphite), and metal laminate structures (such as honeycomb panels or fiber metal laminates). In some instances, the first (bottom or base) and second (top) plates can be independently made of a plastic selected from acrylonitrile butadiene styrene, polycarbonate, nylon, epoxy, glass-reinforced epoxy laminate material (such as FR4), high-pressure fiberglass laminate (such as G10), fiberglass composites, PEEK, polyethylene, polyethylene terephthalate glycol, polypropylene, polyurethane, polyvinyl chloride, polyimide, polytetrafluoroethylene, polylactic acid, PEDOT:PSS (poly(3,4-ethylenedioxythiophene) polystyrene sulfonate), PARA, polyphenylene sulfide, polyamide-imide, and polyetherimide. In still other instances, the first (bottom or base) and second (top) plates can be independently made of a ceramic selected from alumina, aluminum nitride, zirconia, zirconia alumina, beryllium oxide, carbon fiber, graphite, silicon carbide, silicon dioxide, silicon nitride, $Y_2O_3$, TiC, $SrAl_2O_3$, ZrC, HfC, TaC, $ZrB_2$, $HfB_2$, $Mo_2B_5$, $MoSi_2$ TiN, YrN, co-fired ceramics (including high temperature co-fired ceramics (HTCC), low temperature co-fired ceramics (LTCC), ultra low temperature co-fired ceramics (ULTCC), including those consisting of phosphates, silicates, borates, molybdates, vanadates, tellurates and tungstates).

The top and bottom plates of the thermal interface or joint are fastened by one or more fasteners where the one or more fasteners join the first and the second plates through one or more holes present on the top and the bottom plates. There may be any number of the one or more fastener holes present on both plates in the same positions on each plate, as may be needed to allow for fasteners to join the two plates. In some instances, there are at least 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, or 32 fastener holes on each plate. The fastener holes present can have any shape or size as needed. In some instances, the fastener holes are circular and can have a diameter which is suitable to a fastener, such as a bolt. In some instances, the fastener holes may be threaded to receive a threaded fastener. The fastener holes may be spaced in any relative arrangement which is suitable. However, it is preferred in certain instances for the fastener holes to present at one or more edges of the plates. Typically, the fastener holes are evenly spaced on the plates. A non-limiting example of fastener holes on a plate and their relative positions to each other is shown in Figure 4. In some instances, spacing between fastener holes can be between two holes immediately next to each other and the distance can range from about 5 to 600 mm. In some instances, spacing between fastener holes can be between two holes on opposite edges of a plate and the distance can range from about 5 to 600 mm. In still other instances, spacing between fastener holes can be between two holes which are diagonally located from one another on a plate and the distance can range from about 5 to 600 mm.

One or more fasteners can be used to fasten the first (base or bottom) plate and second (top) plates through each of the fastener holes which may be present. The one or more fasteners can be selected from threaded fasteners, clamps, clips, push pins, rivets, a pneumatic press, a hydraulic press, or combinations thereof. Such fasteners are known in the art. The threaded fasteners can be bolts and nuts, such as those known in the art. In some other instances, the threaded fasteners are bolts and potted inserts, such as those known in the art. In some instances, the one or more shims can reduce stress(es) on potted inserts during assembly, such as when one of the plates of the thermal interface is curved or warped prior to fastening; where the reduction in the stress(es) on the potted inserts at least about 10, 20, 30, 40, 50, 60, 70, 80, or 90%, as compared to an equivalent thermal interface excluding the one or more shims being present. The one or more fasteners of any kind used can be made of any suitable material, such as a material selected from steel, titanium, aluminum, nylon, brass, bronze, and zinc. In instances where the fasteners include bolts the bolts may be applied using a suitable amount of bolt torque and the bolts may be tightened in any suitable tightening pattern to ensure uniform fastening between the two plates. Selection of suitable bolts (and nuts), bolting torques, and bolting patterns are known in the art.

In some instances, the single layer gasket is made of a material selected from graphite, carbon fiber, silicone, thermoplastic elastomers, rubber, and acrylic. In still some instances, the material making up the single layer gasket can further include thermally and/or electrically conductive fillers, as known in the art. The single layer gasket can have any suitable thickness. In some instances, the thickness ranges from between about 50 $\mu$m and about 500 $\mu$m.

The single layer gasket can have a modulus of elasticity in a range between about 0.1 MPa to about 50 MPa, about 0.1 MPa to about 100 MPa, about 0.1 MPa to about 150 MPa, or about 0.1 MPa to about 200 MPa. In some instances, each of the layers of the stepped gasket, as may be present, can each independently have a thermal interface resistance in a range between about 0.05 cm$^2$-$^0$C/W to about 1 cm$^2$-$^0$C/W, 0.05 cm$^2$-$^0$C/W to about 5 cm$^2$-$^0$C/W, 0.05 cm$^2$-$^0$C/W to about 2 cm$^2$-$^0$C/W, 0.05 cm$^2$-$^0$C/W to about 3 cm$^2$-$^0$C/W, 0.05 cm$^2$-$^0$C/W to about 4 cm$^2$-$^0$C/W, or 0.05 cm$^2$-$^0$C/W to about 5 cm$^2$-$^0$C/W.

In some cases, the single layer gasket can include an adhesive (i.e., a pressure adhesive or thermal adhesive), preferably on the side which contacts the bottom (base) plate to allow adhesion to the bottom (base) plate.

The use of one or more shims around, close to, and/or behind the one or more fasteners can reduce and/or mitigate the deformation, deflection, or curvature of the first and/or the second plates. The shims provide an increase in contact area between the single layer gasket and the at least one of the first and/or the second plates exhibiting plate deformation, deflection, or curvature. For example, Figures 5A and 5B illustrate that the presence of shims induces an increase in the contact area between the single layer gasket and the top plate exhibiting bending. In some instances, the increase in contact area provides an average thermal conductance across the thermal interface which is at least 25% higher, 30% higher, 40% higher, or 50% higher than that of the same thermal interface without shims present. The thermal conductance is defined as the time rate of steady state heat flow through a unit area of the thermal interface or joint induced by a unit temperature difference between the thermal interface surfaces. In some other instances, the shims can also provide an increase in the temperature uniformity of the first and/or second plates of the thermal interface or joint.

The shims may be placed on top of the single layer gasket. Or, the shims may be placed in such a way that they are not in contact with the single layer gasket. The one or more shims can be placed or located around, close to, and/or behind the one or more fasteners or fastener holes present on the plate(s). In some instances, the one or more shims have a height which is selected to be equal to the height of the single layer gasket. In some instances, the one or more shims are positioned as far behind the fastener holes and fasteners as possible, such as on the very edge of the plates.

The shims can have any suitable shape. In some instances, the one or more shims preferably have an annulus or semi-annulus shape, which may be circular, square, or rectangular. Such semi-annulus shaped shims can be ¼, ½, 1/3, or ¾ semi-annulus shaped shims. Additionally or alternatively, shims having a square or rectangular shape can be used which are placed or located around, close to, and/or behind to at least one corner, edge, and/or center of the first and/or the second plates, as shown in Figure 6B.

In some instances, the shims are made of a metal foil, preferably an aluminum or copper foil. In some other instances, the shims are made of a material selected from graphite, carbon fiber, silicone, thermoplastic elastomers, rubber, and acrylic.

In still other instances, the shims are made of a multilayered or multitiered structure comprising:

at least a first layer or tier comprising a carbon nanotube array comprising vertically aligned carbon nanotubes grown from opposing surfaces of a first planar substrate, and

at least a second layer or tier comprising a carbon nanotube array comprising vertically aligned carbon nanotubes grown from opposing surfaces of a second planar substrate,

wherein the at least first layer or tier and the at least second layer or tier are stacked and the vertically aligned carbon nanotubes of the at least first layer or tier at least partially interdigitate the vertically aligned carbon nanotubes of the at least second layer or tier which are interfacing each other. Such multilayered or multitiered structures, and their methods of making, are as described above and in Section VI below.

The one or more shims independently can have any suitable range. In some instances, the shims have a thickness in a range of between about 25 $\mu$m and about 500 $\mu$m. In some instances, the shims each independently demonstrate a modulus of elasticity in a range between about 5 MPa to about 130 GPa.

## IV. Methods for Preparing Thermal Interfaces or Joints with Stepped Gaskets

The thermal interfaces or joints having stepped gaskets therein can be prepared according to a method including the steps of:

(1) providing first and second plates;
(2) providing a stepped gasket;
(3) placing the stepped gasket in between the first and the second plates;
(4) joining the first and the second plates with one or more fasteners;

wherein at least one of the first and/or the second plates exhibits plate deformation, deflection, or curvature when joined by the one or more fasteners;

wherein the stepped gasket comprises a plurality of layers and there is at least a first base layer and at least a second layer, on top of and in contact with the first base layer, which has a surface area smaller than the surface area of the first base layer; and

wherein the at least second layer of the stepped gasket provides at least one or more contact regions with the at least one of the first and/or the second plates exhibiting plate deformation, deflection, or curvature, as compared to a single layer gasket that is not stepped.

Typically, the one or more fasteners join the first and the second plates through one or more fastener holes present on the first and the second plates.

In some instances of the method, the two plates are usually made of the same material, have the same shape and dimensions, and optionally the same thickness. In some instances, the first (bottom or base) and second (top) plates have a square, rectangular, circular, oval, or ring shape. Typically, the stepped gasket has the same overall shape, for at least the first base layer, as the first and second plates. In some instances, plates having a thickness of about >4 mm can be considered as highly rigid plates, whereas plates having a thickness of about <4 mm can be considered as moderately or lowly rigid plates. In some instances, the plates independently have a thickness ranging from about 0.5 to about 30 mm, about 0.5 to about 20 mm, or about 0.5 to about 10 mm, and sub-ranges within. In certain instances, both plates are ¼" thick plates.

In some instances, the first (bottom or base) and second (top) plates can be independently made of a material selected from aluminum, copper, steel, titanium, zinc, metal matrix composites (such as AlSiC or aluminum-graphite), and metal laminate structures (such as honeycomb panels or fiber metal laminates). In some instances, the first (bottom or base) and second (top) plates can be independently made of a plastic selected from acrylonitrile butadiene styrene, polycarbonate, nylon, epoxy, glass-reinforced epoxy laminate material (such as FR4), high-pressure fiberglass laminate (such as G10), fiberglass composites, PEEK, polyethylene, polyethylene terephthalate glycol, polypropylene, polyurethane, polyvinyl chloride, polyimide, polytetrafluoroethylene, polylactic acid, PEDOT:PSS (poly(3,4-ethylenedioxythiophene) polystyrene sulfonate), PARA, polyphenylene sulfide, polyamide-imide, and polyetherimide. In still other instances, the first (bottom or base) and second (top) plates can be independently made of a ceramic selected from alumina, aluminum nitride, zirconia, zirconia alumina, beryllium oxide, carbon fiber, graphite, silicon carbide, silicon dioxide, silicon

nitride, $Y_2O_3$, TiC, $SrAl_2O_3$, ZrC, HfC, TaC, $ZrB_2$, $HfB_2$, $Mo_2B_5$, $MoSi_2$ TiN, YrN, co-fired ceramics (including high temperature co-fired ceramics (HTCC), low temperature co-fired ceramics (LTCC), ultra low temperature co-fired ceramics (ULTCC), including those consisting of phosphates, silicates, borates, molybdates, vanadates, tellurates and tungstates).

The top and bottom plates of the thermal interface or joint are fastened by one or more fasteners where the one or more fasteners join the first and the second plates through one or more holes present on the top and the bottom plates. There may be any number of the one or more fastener holes present on both plates in the same positions on each plate, as may be needed to allow for fasteners to join the two plates. In some instances, there are at least 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, or 32 fastener holes on each plate. The fastener holes present can have any shape or size as needed. In some instances, the fastener holes are circular and can have a diameter which is suitable to a fastener, such as a bolt. In some instances, the fastener holes may be threaded to receive a threaded fastener. The fastener holes may be spaced in any relative arrangement which is suitable. However, it is preferred in certain instances for the fastener holes to present at one or more edges of the plates. Typically, the fastener holes are evenly spaced on the plates. In some instances, spacing between fastener holes can be between two holes immediately next to each other and the distance can range from about 5 to 600 mm. In some instances, spacing between fastener holes can be between two holes on opposite edges of a plate and the distance can range from about 5 to 600 mm. In still other instances, spacing between fastener holes can be between two holes which are diagonally located from one another on a plate and the distance can range from about 5 to 600 mm.

One or more fasteners can be used to fasten the first (base or bottom) plate and second (top) plates through each of the fastener holes which may be present. The one or more fasteners can be selected from threaded fasteners, clamps, clips, push pins, rivets, a pneumatic press, a hydraulic press, or combinations thereof. Such fasteners are known in the art. The threaded fasteners can be bolts and nuts, such as those known in the art. In some other instances, the threaded fasteners are bolts and potted inserts, such as those known in the art. The one or more fasteners of any kind used can be made of any suitable material, such as a material selected from steel, titanium, aluminum, nylon, brass, bronze, and zinc. In instances where the fasteners include bolts the bolts may be applied using a suitable amount of bolt torque and the bolts may be tightened in any suitable tightening pattern to ensure uniform fastening between the two plates. Selection of suitable bolts (and nuts), bolting torques, and bolting patterns are known in the art.

The stepped gaskets used in the method described above includes a first base layer and at least a second layer thereon. Additional layers, such as a third, fourth, or fifth layer may be included. The first base layer and the other layers can have any suitable shape or thickness, as needed. More typically, the first base layer and the other layers have the same shape (i.e., square, rectangular, circular, regular or irregular shaped, etc.). In some instances, the stepped gasket has a first base layer has dimensions which covers the full area of the plates in between which it is placed. In some other instances, the stepped gasket has a first base layer has dimensions which are smaller than the full area of the plates in between which it is placed, such as to cover at least about 50%, 60%, 70%, 80%, 90% of the area of the plates. The first base layer of the stepped gasket may include hole cut outs to accommodate the fastening holes present on the plates. Each subsequent layer is smaller in size (area) than the layer below it. In some instances, the layer atop has an area between about 1% to 50% than the size of the area of the layer below it. For example, the second layer may have an area of about 1% to 75% or about 1% to 50% of the area of the the first base layer and the third layer, if present, may be about 1% to 75% or about 1% to 50% smaller in area size than that of the second layer. The same is applicable to additional layers relative to the layer on which they are present on. In some cases, each of the layers of the stepped gasket, as may be present, can each independently have a thickness in a range of between about 50 $\mu$m and about 500 $\mu$m. Moreover, in some cases, the increase in height in between layers of the stepped gasket is selected to be less than about 500 $\mu$m, less than about 250 $\mu$m, less than about 150 $\mu$m, or less than about 75 $\mu$m. In some instances, the increase in the height in between layers of the stepped gasket can be determined based on the theoretical deflection from the contacting surface under fastener load, as predicted by using Euler-Bernoulli beam theory, Timoshenko beam theory, or Kirchhoff-Love plate theory while considering the gasket layers as a compressible and elastic foundation.

In some instances of the method, each of the plurality of layers of the stepped gasket can be independently made of a material selected from graphite, carbon fiber, silicone, thermoplastic elastomers, rubber, and acrylic. Typically, each stepped gasket having at least two layers is made of layers made of identical materials where the number of layers and thickness of each may be varied, as appropriate. In some instances, layers of different material types could be used. In still some instances, the material making up each layer of stepped gasket can further include thermally and/or electrically conductive fillers, which are known in the art.

In still other cases, the first base layer can include an adhesive (i.e., a pressure adhesive or thermal adhesive), preferably on the side which does not have any additional layers thereon.

In some cases, the stepped gasket can be made of multilayered or multitiered structures containing carbon nanotube arrays or sheets. For example, the stepped gasket can be a multilayered or multitiered structure containing:

at least a first layer or tier comprising a carbon nanotube array comprising vertically aligned carbon nanotubes grown from opposing surfaces of a first planar substrate, and

at least a second layer or tier comprising a carbon nanotube array comprising vertically aligned carbon nanotubes grown from opposing surfaces of a second planar substrate,

wherein the at least first layer or tier and the at least second layer or tier are stacked and the vertically aligned carbon nanotubes of the at least first layer or tier at least partially interdigitate the vertically aligned carbon nanotubes of the at least second layer or tier which are interfacing each other. Such stepped gaskets made of multilayered or multitiered structures, and their methods of making, are as described above and in Sections II and VI.

In some instances, the method further includes a step of placing one or more shims between the first and the second plates prior to step (4). In some cases, the shims are placed during step (3) or before or following step (3). The one or more shims can be placed or located around, close to, and/or behind the one or more fasteners or fastener holes present on the plate(s).

The shims can have any suitable shape. In some instances, the one or more shims preferably have an annulus or semi-annulus shape, which may be circular, square, or rectangular. Such semi-annulus shaped shims can be ¼, ½, 1/3, or ¾ semi-annulus shaped shims. Additionally or alternatively, shims having a square or rectangular shape can be used which are placed or located around, close to, and/or behind to at least one corner, edge, and/or center of the first and/or the second plates. In some instances, the one or more shims have a height which is selected to be equal to the height of the first layer of stepped gasket. In some instances, the one or more shims are positioned as far behind the fastener holes and fasteners as possible, such as on the very edge of the plates.

In some instances of the method, the shims are made of a metal foil, preferably an aluminum or copper foil. In some other instances, the shims are made of a material selected from graphite, carbon fiber, silicone, thermoplastic elastomers, rubber, and acrylic.

In still other instances, the shims are made of a multilayered or multitiered structure comprising:

at least a first layer or tier comprising a carbon nanotube array comprising vertically aligned carbon nanotubes grown from opposing surfaces of a first planar substrate, and

at least a second layer or tier comprising a carbon nanotube array comprising vertically aligned carbon nanotubes grown from opposing surfaces of a second planar substrate,

wherein the at least first layer or tier and the at least second layer or tier are stacked and the vertically aligned carbon nanotubes of the at least first layer or tier at least partially interdigitate the vertically aligned carbon nanotubes of the at least second layer or tier which are interfacing each other. Such multilayered or multitiered structures, and their methods of making, are as described above and in Section VI below.

The one or more shims independently can have any suitable range. In some instances, the shims have a thickness in a range of between about 25 $\mu$m and about 500 $\mu$m. In some instances, the shims each independently demonstrate a modulus of elasticity in a range between about 5 MPa to about 130 GPa.

**V. Methods for Preparing Thermal Interfaces or Joints with Shims**

The thermal interfaces or joints having shims therein can be prepared according to a method including the steps of:

(1) providing first and second plates;
(2) providing a single layer gasket;
(3) placing the single layer gasket in between the first and the second plates;
(4) placing one or more shims in between the first and the second plates;
(5) joining the first and the second plates with one or more fasteners;

wherein at least one of the first and/or the second plates exhibits plate deformation, deflection, or curvature when joined by the one or more fasteners;

wherein one or more shims are present around, close to, and/or behind the one or more fasteners to reduce and/or mitigate the deformation, deflection, or curvature of the first and/or the second plates.

In some instances, steps (3) and (4) may be combined into a single step.

For the method described, the two plates are usually made of the same material, have the same shape and dimensions, and optionally the same thickness. In some instances, the first (bottom or base) and second (top) plates have a square, rectangular, circular, oval, or ring shape. Typically, the single layer gasket has the same overall shape, for at least the first base layer, as the first and second plates. In some instances, plates having a thickness of about >4 mm can be considered as highly rigid plates, whereas plates having a thickness of about <4 mm can be considered as moderately or lowly rigid plates. In some instances, the plates independently have a thickness ranging from about 0.5 to about 30 mm, about 0.5 to about 20 mm, or about 0.5 to about 10 mm, and sub-ranges within. In certain instances, both plates are ¼" thick plates.

In some instances, the first (bottom or base) and second (top) plates can be independently made of a material selected from aluminum, copper, steel, titanium, zinc, metal matrix composites (such as AlSiC or aluminum-graphite), and metal laminate structures (such as honeycomb panels or fiber metal laminates). In some instances, the first (bottom or base) and second (top) plates can be independently made of a plastic selected from acrylonitrile butadiene styrene, polycarbonate, nylon, epoxy, glass-reinforced epoxy laminate material (such as FR4), high-pressure fiberglass laminate (such as G10), fiberglass composites, PEEK, polyethylene, polyethylene terephthalate glycol, polypropylene, polyurethane, polyvinyl chloride, polyimide, polytetrafluoroethylene, polylactic acid, PEDOT:PSS (poly(3,4-ethylenedioxythiophene) polystyrene sulfonate), PARA, polyphenylene sulfide, polyamide-imide, and polyetherimide. In still other instances, the first (bottom or base) and second (top) plates can be independently made of a ceramic selected from alumina, aluminum nitride, zirconia, zirconia alumina, beryllium oxide, carbon fiber, graphite, silicon carbide, silicon dioxide, silicon nitride, $Y_2O_3$, TiC, $SrAl_2O_3$, ZrC, HfC, TaC, $ZrB_2$, $HfB_2$, $Mo_2B_5$, $MoSi_2$ TIN, YrN, co-fired ceramics (including high temperature co-fired ceramics (HTCC), low temperature co-fired ceramics (LTCC), ultra low temperature co-fired ceramics (ULTCC), including those consisting of phosphates, silicates, borates, molybdates, vanadates, tellurates and tungstates).

The top and bottom plates of the thermal interface or joint are fastened by one or more fasteners where the one or more fasteners join the first and the second plates through one or more holes present on the top and the bottom plates. There may be any number of the one or more fastener holes present on both plates in the same positions on each plate, as may be needed to allow for fasteners to join the two plates. In some instances, there are at least 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, or 32 fastener holes on each plate. The fastener holes present can have any shape or size as needed. In some instances, the fastener holes are circular and can have a diameter which is suitable to a fastener, such as a bolt. In some instances, the fastener holes may be threaded to receive a threaded fastener. The fastener holes may be spaced in any relative arrangement which is suitable. However, it is preferred in certain instances for the fastener holes to present at one or more edges of the plates. Typically, the fastener holes are evenly spaced on the plates. A non-limiting example of fastener holes on a plate and their relative positions to each other is shown in Figure 4. In some instances, spacing between fastener holes can be between two holes immediately next to each other and the distance can range from about 5 to 600 mm. In some instances, spacing between fastener holes can be between two holes on opposite edges of a plate and the distance can range from about 5 to 600 mm. In still other instances, spacing between fastener holes can be between two holes which are diagonally located from one another on a plate and the distance can range from about 5 to 600 mm.

One or more fasteners can be used to fasten the first (base or bottom) plate and second (top) plates through each of the fastener holes which may be present. The one or more fasteners can be selected from threaded fasteners, clamps, clips, push pins, rivets, a pneumatic press, a hydraulic press, or combinations thereof. Such fasteners are known in the art. The threaded fasteners can be bolts and nuts, such as those known in the art. In some other instances, the threaded fasteners are bolts and potted inserts, such as those known in the art. The one or more fasteners of any kind used can be made of any suitable material, such as a material selected from steel, titanium, aluminum, nylon, brass, bronze, and zinc. In instances where the fasteners include bolts the bolts may be applied using a suitable amount of bolt torque and the bolts may be tightened in any suitable tightening pattern to ensure uniform fastening between the two plates. Selection of suitable bolts (and nuts), bolting torques, and bolting patterns are known in the art.

In some instances of the method, the single layer gasket is made of a material selected from graphite, carbon fiber, silicone, thermoplastic elastomers, rubber, and acrylic. In still some instances, the material making up the single layer gasket can further include thermally and/or electrically conductive fillers, as known in the art. The single layer gasket can have any suitable thickness. In some instances, the thickness ranges from between about 50 µm and about 500 µm.

In some cases, the single layer gasket can include an adhesive (i.e., a pressure adhesive or thermal adhesive), preferably on the side which contacts the bottom (base) plate to allow adhesion to the bottom (base) plate.

The use of one or more shims around, close to, and/or behind the one or more fasteners can reduce and/or mitigate the deformation, deflection, or curvature of the first and/or the second plates. The shims provide an increase in contact area between the single layer gasket and the at least one of the first and/or the second plates exhibiting plate deformation, deflection, or curvature. For example, Figures 5A and 5B illustrate that the presence of shims induces an increase in the contact area between the single layer gasket and the top plate exhibiting bending.

The shims may be placed on top of the single layer gasket. Or, the shims may be placed in such a way that they are not in contact with the single layer gasket. The one or more shims can also be placed or located around, close to, and/or behind the one or more fasteners or fastener holes present on the plate(s). In some instances, the one or more shims have a height which is selected to be equal to the height of the single layer gasket. In some instances, the one or more shims are positioned as far behind the fastener holes and fasteners as possible, such as on the very edge of the plates.

The shims can have any suitable shape. In some instances, the one or more shims preferably have an annulus or semi-annulus shape, which may be circular, square, or rectangular. Such semi-annulus shaped shims can be ¼, ½, 1/3, or ¾ semi-annulus shaped shims. Additionally or alternatively, shims having a square or rectangular shape can be used which are placed or located around, close to, and/or behind to at least one corner, edge, and/or center of the first and/or the second plates, as shown in Figure 6B.

In some instances, the shims are made of a metal foil, preferably an aluminum or copper foil. In some other instances, the shims are made of a material selected from graphite, carbon fiber, silicone, thermoplastic elastomers, rubber, and acrylic.

In still other instances, the shims are made of a multilayered or multitiered structure comprising:

at least a first layer or tier comprising a carbon nanotube array comprising vertically aligned carbon nanotubes grown from opposing surfaces of a first planar substrate, and

at least a second layer or tier comprising a carbon nanotube array comprising vertically aligned carbon nanotubes grown from opposing surfaces of a second planar substrate,

wherein the at least first layer or tier and the at least second layer or tier are stacked and the vertically aligned carbon nanotubes of the at least first layer or tier at least partially interdigitate the vertically aligned carbon nanotubes of the at least second layer or tier which are interfacing each other. Such multilayered or multitiered structures, and their methods of making, are as described in Section II and VI below.

## VI. Methods for Preparing Multilayered or Multitiered Structures

Multilayered or multitiered structures made of stacked carbon nanotube arrays or sheets, as discussed above, can be prepared as follows. These multilayered or multitiered structures can be used as stepped gaskets or may form one or more layers of stepped gaskets, as well as shims, as described elsewhere.

## A. Carbon Nanotube Arrays

Carbon nanotube arrays can be prepared using techniques well known in the art. The arrays may be prepared as described in U.S. Publication No. 2014-0015158-A1. This method involves the use of multilayer substrates to promote the growth of dense vertically aligned CNT arrays and provide excellent adhesion between the CNTs and metal surfaces.

The multilayer substrates contain three or more layers deposited on an inert support, such as a metal surface. Generally, the multilayer substrate contains an adhesion layer, an interface layer, and a catalytic layer, deposited on the surface of an inert support. Generally, the support is formed at least in part from a metal, such as aluminum, platinum, gold, nickel, iron, tin, lead, silver, titanium, indium, copper, or combinations thereof. In certain instances, the support is a metallic foil, such as aluminum or copper foil. The support may also be a surface of a device, such as a conventional heat sink or heat spreader used in heat exchange applications.

The adhesion layer is formed of a material that improves the adhesion of the interface layer to the support. An adhesion layer may be a thin film of iron. Generally, the adhesion layer must be thick enough to remain a continuous film at the elevated temperatures used to form CNTs. The adhesion layer also generally provides resistance to oxide and carbide formation during CNT synthesis at elevated temperatures.

The interface layer is preferably formed from a metal which is oxidized under conditions of nanotube synthesis or during exposure to air after nanotube synthesis to form a suitable metal oxide. Examples of suitable materials include aluminum. Alternatively, the interface layer may be formed from a metal oxide, such as aluminum oxide or silicon oxide. Generally, the interface layer is thin enough to allow the catalytic layer and the adhesion layer to diffuse across it. Where the catalytic layer and the adhesion layer have the same composition, this reduces migration of the catalyst into the interface layer, improving the lifetime of the catalyst during nanotube growth.

The catalytic layer is typically a thin film formed from a transition metal that can catalyze the formation of carbon nanotubes via chemical vapor deposition. Examples of suitable materials that can be used to form the catalytic layer include iron, nickel, cobalt, rhodium, palladium, and combinations thereof. A catalytic layer may be formed of iron. The catalytic layer is of appropriate thickness to form catalytic nanoparticles or aggregates under the annealing conditions used during nanotube formation.

A multilayer substrate may serve as catalytic surface for the growth of a CNT array. In these instances, the process of CNT growth using chemical vapor deposition alters the morphology of the multilayer substrate. Specifically, upon heating, the interface layer is converted to a metal oxide, and forms a layer or partial layer of metal oxide nanoparticles or aggregates deposited on the adhesion layer. The catalytic layer similarly forms a series of catalytic nanoparticles or aggregates deposited on the metal oxide nanoparticles or aggregates. During CNT growth, CNTs form from the catalytic nanoparticles or aggregates. The resulting CNT arrays contain CNTs anchored to an inert support via an adhesion layer, metal oxide nanoparticles or aggregates, and/or catalytic nanoparticles or aggregates.

A multilayer substrate may be formed from an iron adhesion layer of about 30 nm in thickness, an aluminum or alumina interface layer of about 10 nm in thickness, and an iron catalytic layer of about 3 nm in thickness deposited on a metal surface. An iron adhesion layer may adhere to both the metal surface and the Al (alumina nanoparticles or aggregates after growth) or $Al_2O_3$ interface layer. The iron catalytic layer forms iron nanoparticles or aggregates from which CNTs grow. These iron nanoparticles or aggregates are also bound to the alumina below.

As a result, well bonded interfaces exist on both sides of the oxide interface materials. Of metal/metal oxide interfaces, the iron-alumina interface is known to be one of the strongest in terms of bonding and chemical interaction. Further, metals (*e.g.,* the iron adhesion layer and the metal surface) tend to bond well to each other because of strong electronic coupling. As a consequence, the CNTs are strongly anchored to the metal surface.

Further, subsurface diffusion of iron from the catalytic layer during nanotube growth is reduced because the same metal is on both sides of the oxide support, which balances the concentration gradients that would normally drive diffusion. Therefore, catalyst is not depleted during growth, improving the growth rate, density, and yield of nanotubes in the array.

In some embodiments, the CNT array is formed by vertically aligning a plurality of CNTs on the multilayer substrate described above. This can be accomplished, for example, by transferring an array of CNTs to the distal ends of CNTs grown on the multilayer substrate. Tall CNT arrays are transferred to the distal ends of very short CNTs on the multilayer substrate. This technique improves the bond strength by increasing the surface area for bonding.

The inert support for the CNT array or sheet can be a piece of metal foil, such as aluminum foil. In these cases, CNTs are anchored to a surface of the metal foil via an adhesion layer, metal oxide nanoparticles or aggregates, and catalytic nanoparticles or aggregates. In some instances only one surface (*i.e.,* side) of the metal foil contains an array or sheet of aligned CNTs anchored to the surface. In other cases, both surfaces (*i.e.,* sides) of the metal foil contain an array or sheet of aligned CNTs anchored to the surface. An inert support for the CNT array or sheet is a surface of a conventional metal heat sink or heat spreader. In these cases, CNTs are anchored to a surface of the heat sink or heat spreader via an adhesion layer, metal oxide nanoparticles or aggregates, and catalytic nanoparticles or aggregates. This functionalized heat sink or heat spreader may then be abutted or adhered to a heat source, such as an integrated circuit package.

## B. Carbon Nanotube Sheets

Carbon nanotube sheets can be prepared using techniques well known in the art. In one embodiment, the sheets are prepared as described in U.S. 7,993,620 B2. In this method, CNT agglomerates are collected into sheets *in-situ* inside the growth chamber on metal foil substrates. The sheets can then be densified by removing the solvent. In another method, the CNT sheets are made by vacuum filtration of CNT agglomerates that are dispersed in a solvent.

## C. Coated Nanotube Arrays and Sheets

### 1. Polymer coatings

Polymers to be coated can be dissolved in one or more solvents and spray or dip coated or chemically or electrochemically deposited onto the vertical CNT forests or arrays grown on a substrate, or on a sheet, as described above. The coating materials can also be spray coated in powder form onto the top of vertical CNT forests or arrays grown on a substrate, or on CNT sheets as described above. The coatings includes polymers or molecules that bond to CNTs through van der Waals bonds, $\pi$-$\pi$ stacking, mechanical wrapping and/or covalent bonds and bond to metal, metal oxide, or semiconductor material surfaces through van der Waals bonds, $\pi$-$\pi$ stacking, and/or covalent bonds.

For spray or dip coating, coating solutions can be prepared by sonicating or stirring the coating materials for a suitable amount of time in an appropriate solvent. The solvent is typically an organic solvent or solvent and should be a solvent that is easily removed, for example by evaporation at room temperature or elevated temperature. Suitable solvents include, but are not limited to, chloroform, xylenes, hexanes, pyridine, tetrahydrofuran, ethyl acetate, and combinations thereof. The polymer can also be spray coated in dry form using powders with micron scale particle sizes, *i.e.,* particles with diameters less than about 100, 50, 40, 20, 10 micrometers. Here the polymer powder would need to be soaked with solvent or heated into a liquid melt to spread the powder particles into a more continuous coating after they are spray deposited.

The thickness of the coatings is generally between 1 and 1000 nm, preferably between 1 and 500 nm, more preferably between 1 and 100 nm, most preferably between 1 and 50 nm. The coating thickness may be less than 500, 450, 400, 350, 300, 250, 200, 150, 100, 90, 80, 70, 60, 50, 40, 30, 20 or 10 nm.

Spray coating process restricts the deposition of coating to the CNT tips and limits clumping due to capillary forces associated with the drying of the solvent. The amount of coating visible on the CNT arrays increases with the number of sprays. Alternative techniques can be used to spray coat the coating materials onto the CNT arrays including techniques more suitable for coating on a commercial scale.

In the demonstration of a coating process, CNT sheets are dipped into coating solutions or melted coatings to coat CNTs throughout the thickness of the sheets, increasing the thermal conductivity of the sheet in the cross-plane direction by greater than 20, 30, 50, or 70 %. These coated sheets are then placed between a chip and heat sink or heat spreader with the application of solvent or heat to reflow the polymer and bond the CNT sheet between the chip and heat sink or spreader to reduce the thermal resistance between the chip and heat sink or heat spreader.

A coating material can be deposited on the CNT array or sheet using deposition techniques known in the art, such as chemical deposition (e.g., chemical vapor deposition (CVD)), aerosol spray deposition, and electrochemical deposition.

A polymer coating can be applied by electrochemical deposition. In electrochemical deposition, the monomer of the polymer is dissolved in electrolyte and the CNT array or sheet is used as the working electrode, which is opposite the counter electrode. A potential is applied between the working and counter electrode with respect to a third reference electrode. The monomer is electrooxidized on the CNT array tips or sheet sidewalls that face the electrolyte as a result of the applied potential. Controlling the total time in which the potential is applied controls the thickness of the deposited polymer layer.

A coating material may be, or may contain, one or more oligomeric and/or polymeric materials. A polymer can be a conjugated polymer, including aromatic and non-aromatic conjugated polymers. Suitable classes of conjugated polymers include polyaromatic and polyheteroaromatics including, but not limited to, polythiophenes (including alkyl-substituted polythiophenes), polystyrenes, polypyrroles, polyacetylenes, polyanilines, polyfluorenes, polyphenylenes, polypyrenes, polyazulenes, polynaphthalenes, polycarbazoles, polyindoles, polyazepines, poly(3,4-ethylenedioxythiophenes), poly(p-phenyl sulfides), and poly(p-phenylene vinylene). Suitable non-aromatic polymers include, but are not limited to, polyacetylenes and polydiacetylenes. The polymer classes listed above include substituted polymers, wherein the polymer backbone is substituted with one or more functional groups, such as alkyl groups. A polymer may be polystyrene (PS). In other embodiments, the polymer is poly(3-hexythiophene) (P3HT).

A polymer may be a non-conjugated polymer. Suitable non-conjugated include, but are not limited to, polyvinyl alcohols (PVA), poly(methyl methacrylates) (PMMA), polysiloxanes, polyurethanes, polydimethylsiloxanes (PDMS), and combinations (blends) thereof.

A polymer may be a paraffin wax. A polymer may be a synthetic wax such as Fischer-Tropsch waxes or polyethylene waxesA polymer may be a wax that has a melting temperature above 80, 90, 100, 110, and 120 °C, preferably above 130 °C.

A polymer may be an adhesive, such as, but not limited to, a hot glue or hot melt adhesive that combines wax, tackifiers and a polymer base to provide improved surface adhesion. An adhesive may be a pressure sensitive adhesive. An adhesive may be a monomer that polymerizes upon contact with air or water such as a cyanoacrylate. An adhesive may be a combination of a pressure sensitive adhesive polymer and a thermally activated (or activatable) adhesive polymer which enhances ease of adhesion of a multilayered or multitiered structure described herein which includes such a combination of coatings to a surface(s), by way of the pressure sensitive adhesive and additional and more permanent or semi-permanent adhesion by way of the thermal adhesive.

## 2. Metallic Nanoparticles

The CNT arrays or sheets can be coated with one or more metal nanoparticles. One or more metal nanoparticles may be adsorbed to the distal ends and/or sidewalls of the CNTs to bond the distal ends of the CNTs to a surface, reduce thermal resistance between the CNT array or sheet and a surface, or combinations thereof. Metal nanoparticles can be applied to CNT arrays or sheets using a variety of methods known in the art. For example, a solution of metal thiolate such as palladium hexadecanethiolate can be sprayed or spin coated onto the distal ends and/or sidewalls of the CNTs, and the organics can be baked off to leave palladium nanoparticles. In another example, electron-beam or sputter deposition can be used to coat metal nanoparticles or connected "film-like" assemblies of nanoparticles onto the distal ends and/or sidewalls of the CNTs. The metallic particles can be coated simultaneously with the coating or before or after coating.

Examples of suitable metal nanoparticles include palladium, gold, silver, titanium, iron, nickel, copper, and combinations thereof.

## 3. Flowable or Phase Change Materials

Flowable or phase change materials can be applied to the CNT array or sheet. Flowable or phase change materials may be added to the CNT array or sheet to displace the air between CNTs and improve contact between the distal ends of CNTs and a surface, and as a result reduce thermal resistance of the array or sheet and the contact between the array or sheet and a surface, or combinations thereof. Flowable or phase change materials can be applied to CNT arrays or sheets using a variety of methods known in the art. For example, flowable or phase change materials in their liquid state can be wicked into a CNT array or sheet by placing the array or sheet in partial or full contact with the liquid.

Examples of suitable flowable or phase change materials include paraffin waxes, polyethylene waxes, hydrocarbon-based waxes in general, and blends thereof. Other examples of suitable flowable or phase change materials that are neither wax nor polymeric include liquid metals, oils, organic-inorganic and inorganic-inorganic eutectics, and blends thereof. Coating material(s) and the flowable or phase change material may be the same.

The coatings, metallic particles, and/or flow or phase change materials described above can be applied directly to the CNT arrays or sheets and the coated CNT arrays or sheets can subsequently be stacked to form multilayered or multitiered structures. Coatings, metallic particles, and/or flow or phase change materials described above may be applied during the stacking of two or more CNT arrays or sheets. Coatings, metallic particles, and/or flow or phase change materials described above may be applied following the stacking of two or more CNT arrays or sheets. In non-limiting embodiments, multilayered or multitiered structure(s) are formed by first stacking two or more CNT arrays or sheets and then the at least partially interdigitated tiers of the formed structures are infiltrated with one or more coatings, metallic particles, and/or flow or phase change materials, or combinations thereof. The introduction of such coatings/materials into the at least partially interdigitated tiers of the multilayered or multitiered structure(s) prior to, during, or after stacking can be used to modify and/or enhance the thermal transport or thermal resistance properties of the multilayered or multitiered structures resulting from the stacking of the CNT arrays or sheets.

## D. Multilayered or Multitiered Structures

A method of making the multilayered or multitiered structures may further include a step of applying or infiltrating a coating, a coating of metallic nanoparticles, and/or a coating of flowable or phase change materials, which are described above. A step of applying or infiltrating a coating, a coating of metallic nanoparticles, and/or a coating of flowable or phase change materials may occur prior to stacking, alternatively during stacking, or alternatively after stacking. A method may include applying pressure during the stacking step. The applied pressure may be in the range of about 1-100 psi, 1-50 psi, 1-30 psi, more preferably about 1-20 psi, and most preferably about 1-15 psi. The pressure may be about 15 psi, wherein 1 psi is 6.89476 kPa. Pressure may be applied continuously until the adjacent tiers are bonded, if a coating material(s) which can act as a bonding agent, such as an adhesive or phase change material, is used. Pressure may be applied for any suitable amount of time. Only a short time may be used, such as less than 1 minute, if no bonding agent is used.

At least two CNT arrays or sheets can be stacked to form the multilayered or multitiered structures. For example, Figure 2 shows stacking of three CNT arrays (right side). By using more CNT arrays the thickness of the multilayered or multitiered structures can be increased as needed. Up to 5, 10, 15, 20, 25, 30, or more CNT arrays or sheets can be stacked according to the method described above. The thickness of the resulting multilayered or multitiered structures formed by stacking can be in the range 1-10,000 microns or more.

Multilayered or multitiered structures can be formed by stacking multiple tiers of CNT arrays in a stepped manner, off-set manner, and/or other non-uniform manner in order to be able to conform to complex surfaces.

In a non-limiting embodiment, at least two vertically aligned arrays or sheets formed on supports/substrates are stacked/contacted such that the nanostructure elements, such as CNTs, of the arrays at least partially interdigitate on contact. In one embodiment full interdigitation of nanostructure elements of the arrays occurs within one another when stacked. In other embodiments the arrays may interdigitate only at the tips of the nanostructure elements, such as CNTs. In yet other embodiments, the individual nanostructures can navigate through the nanostructures of the adjacent array during the interdigitating process.

In some embodiments the nanostructures of the stacked arrays, which interdigitate at least partially, may also form into larger superstructures, such as, but not limited to, tube bundles, clumps, or rows. These superstructures may be formed through mechanisms such as capillary clumping or by way of application of a polymer coating prior to, during, or following the stacking process.

A polymer coating and/or adhesive, or other coating as described above, may be applied to the CNT array(s) which are then stacked. In such embodiments, the thickness of the coating and/or adhesive, or other coating as described above, is about 1-1000 nm, more preferable 1-500 nm, and most preferably 1-100 nm.

Following the stacking step the method may further includes a step of applying an adhesive, such as but not limited to a hot glue or hot melt adhesive that combines wax, tackifiers and a polymer base to the resulting stack to provide improved adhesion properties to one or more surfaces of the stacked/tiered CNT arrays forming the multilayered or multitiered structure. An adhesive may be a pressure sensitive adhesive. An adhesive may be a combination of a pressure sensitive adhesive polymer and a thermally activated (or activatable) adhesive polymer which enhances ease of adhesion of a multilayered or multitiered structure described herein which includes such a combination of coatings to a surface(s), by way of the pressure sensitive adhesive and additional and more permanent or semi-permanent adhesion by way of the thermal adhesive.

One or more tiers of the stacked arrays described above may be substituted with other materials to afford a composite stack. Such materials include, but are not limited to, solders, greases, adhesives, phase change materials, gels, heat spreaders, compliant pads, and/or (elastomeric) gap pads. The substitution of these materials for one or more CNT array tiers of the multitiered or multilayered stacks described can be used to further tune the properties of the resulting composite stack. Such composite stacks may be used for a variety of applications described below, such as thermal interface materials (TIMs).

Yet another option is introduce a dielectric material or induce the formation of a dielectric material within the layers/tiers of stacked arrays in order to convert the resulting composite stack from an electrical conductor into an insulator. Dielectric materials are known in the art, such as ceramic insulating materials. As one example, one or more of the substrates of the CNT arrays present in a multitiered stack, which is formed from aluminum, can oxidized (such as by anodization) to produce an electrically insulating stack.

Once prepared according to methods above, the multilayered or multitiered structures can be used as stepped gaskets and shims. The multilayered or multitiered structures can have any suitable shape and dimensions, and thickness for use as a stepped gasket and/or shim. The skilled person can form multilayered or multitiered structures having the desired number of layers (2, 3, 4, or more layers or tiers) to function as a stepped gasket, as required to address the curvature present in the top plate of a thermal interface or joint. The skilled person can also modify multilayered or multitiered structures, as needed, such as to have a particularly desired shape or dimension needed to act as a shim. For example, multilayered or multitiered structures can be made to have an annulus or semi-annulus shape, which may be circular, square, or rectangular. Additionally or alternatively, shims made of multilayered or multitiered structures and having a square or rectangular shape can be prepared.

## VII. Applications

The thermal interfaces or joints described above can form part of a device. Such devices, include without limitation, personal computers, server computers, memory modules, graphics chips, radar and radio-frequency (RF) devices, disc drives, displays, including light-emitting diode (LED) displays, lighting systems, automotive control units, power-electronics, solar cells, batteries, communications equipment, such as cellular phones, thermoelectric generators, and imaging equipment, including MRIs.

In certain instances, the thermal interfaces or joints described throughout the specification are useful in low contact pressure and/or low pressure applications. Low pressure may refer to ambient pressure or pressures below 1 atm, such as in the range of about 0.01 to less than about 1 atm. In some instances, low pressure may refer to a vacuum, such as in aerospace applications, where such thermal interfaces or joints could be used in satellites or space vehicles/systems. Under vacuum conditions the thermal interfaces or joints are especially useful because unlike in atmospheric pressure applications where air in the separation gap between plates can contribute to heat transfer, the additional contact points enabled by the stepped gasket can substantially enhance area participating in heat transfer across the joint. Furthermore, the use of thick gaskets to make up contact in space applications can be problematic as the plate deformation that goes along with thick gaskets can result in stresses on potted inserts that can result in the inserts pulling out during the life of the spacecraft. In certain instances, the thermal interfaces or joints described are useful at temperatures which are below ambient temperature, below freezing, or at cryogenic temperatures (such as experienced in space).

## Examples

### Example 1. Thermal Interfaces containing Stepped Gaskets Materials and Methods:

#### *Test Samples*

Gaskets used were acquired from Carbice® Corporation. The gaskets consist of a vertically aligned carbon nanotube array grown on 50 $\mu$m aluminum foil and encapsulated in silicone. The thicknesses of the gasket products used were 65 $\mu$m and 125 $\mu$m with compressive modulus of elasticity estimated at about 18 and 35 MPa, respectively. The modulus of elasticity was calculated from stress-strain data that was collected using a Precision Thickness Gauge (Hanatek Instruments) under loads varying from 0.2 to 1.4 MPa.

In addition, stepped gaskets were prepared from the single layer 65 $\mu$m and 125 $\mu$m gaskets by stacking the gaskets. Accordingly, 1, 2, 3, and 4 layer gaskets were studied, as follows:

- 1 layer (single layer gasket): 500 $\mu$m
- 1 layer (single layer gasket): 125 $\mu$m
- 2 layers (stepped gasket): 125 $\mu$m (base layer) and 65 $\mu$m (layer #3 in Table 1 below)
- 3 layers (stepped gasket): 125 $\mu$m and 2 $\times$ (65 $\mu$m- layers #2 &#3 in Table 1 below)
- 4 layers (stepped gasket): 125 $\mu$m and 3 $\times$ (65 $\mu$m layers #2, #3, and #4 in Table 1 below)

The dimensions of these layers, as described above, are given in Table 1 below.

**Table 1.**

| Layer | Thickness | Size (mm) | |
|---|---|---|---|
| | | X | Y |
| #1 | 125 μm | 364 | 516 |
| | | | |
| #2 | 65 μm | 228 | 360 |
| #3 | 65 μm | 156 | 240 |
| #4 | 65 μm | 70 | 108 |
| | | | |
| #1 | 500 μm | 364 | 516 |

*Thermal Conductance Properties of Samples*

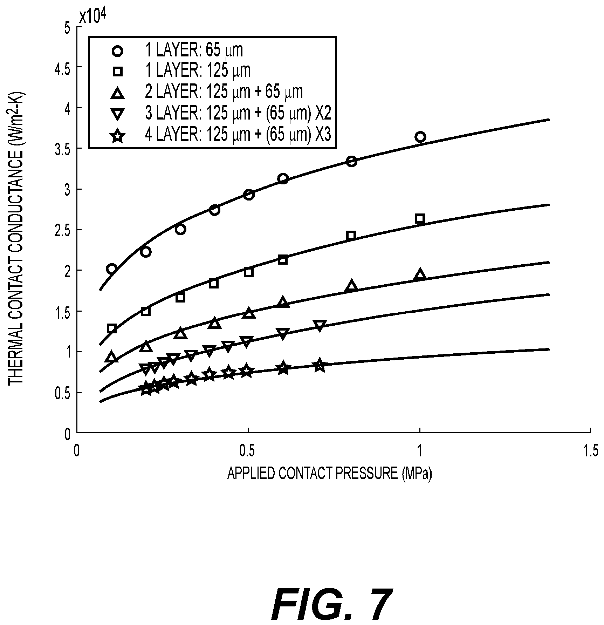

The thermal properties of the single and stepped gaskets were recorded for each sample thickness, as well as for each multilayered sample combination studied. 1 cm × 1 cm samples were measured in a modified ASTM-D5470 stepped bar apparatus to record 1D steady state thermal contact resistance (inverse of conductance). The relationship between applied contact pressure and conductance approximately follows a power law correlation, which was uniquely fitted to each gasket sample and multilayer combination used in this study (*see* Figure 7). These pressure-conductance relations are used to correlate the deflection-based gasket pressure distribution in bolted joint predictions into spatial distribution of thermal contact conductance.

*Stepped Gasket Selection and Solution Determination*

To achieve conformal contact with plate surfaces, stepped gaskets having a pyramidal/stepped formation were studied, as discussed above. The parameters of interest were the number of gasket layers in the tiered/stacked formation, the thickness of each tier, and the precise positioning of each layer. For a given bolted joint configuration, various combinations of these parameters were studied in the numerical approach outlined below that would give the best thermal performance.

Since these studies incorporate a selection of commercially available single layer gasket materials, the height selection was constrained to combinations of 65 μm material layers. Though it was found that using a thicker base layer of 125 μm provided for easier handling and assembly without significantly affecting thermal performance.

The precise positioning of each layer was a factor that affected the resulting contact through the entire stepped gasket. Thus, due to the complexity and sensitivity of the stepped gaskets, there was evidence of diminishing returns beyond a two-tiered gasket. Nevertheless, use of three or even four layers can be useful depending on circumstances.

Once the multi-tier/layer structure was determined for a given bolted joint configuration, each gasket layer was laser cut to size from large sheets of material and assembled layer by layer.

*Numerical Modeling of Bolted Joint Deflection*

The deflection characteristics of bolted joints (or interfaces) that incorporate stepped gaskets was numerically modeled to assess the effect of gasket layer and position on the interface contact and thermal performance. First, perimeter-bolted plates were examined and approximated as Euler-Bernoulli beams with the thin gasket layer(s) between mating surfaces treated as a compressive elastic foundation. Classical beam theory then gives the following equation:

$$D \frac{d^4 w(x)}{dx^4} = p(x) \qquad (1)$$

where *w* is the deflection of the beam and $D = Et^3/12$ is the flexural rigidity of the beam according to thickness, *t*, and the elastic modulus of the beam, *E*. *p(x)* is the distributed load which incorporates both the applied load in the vicinity of the bolts as well as the reaction force of the gasket under compression, $p_g(x)$. Following Hooke's Law, this reaction pressure exerted by a single layer of compressed gasket is $p_g(x) = k_g w(x)$ for $w(x) < 0$ and $q_g = 0$ otherwise (in separation). Here the gasket stiffness is known from the measured sample properties by $k_g = E_g/t_g$. For a stepped gasket comprising multiple stepped layers, the equivalent stiffness used for calculation in the multilayer region is calculated by the reduced sum of the stiffness constants for the individual layers.

The predicted deflection of the bolted joints was calculated by numerically solving Eq. (1) while iteratively determining regions of gasket compression versus separation. The deflection characteristics provided a picture of the pressure distribution of the compressed gasket, which, according to the correlations highlighted in Figure 7, allow estimation of the thermal contact conductance distribution afforded by the gasket through the bolted interface. The compression of the gasket can be extracted from this beam position data, which can then be used, along with measured values of modulus and thermal conductance, to output the pressure and subsequently the local thermal contact conductance of the gasket.

***Experimental Methods of Contact and Conductance in Bolted Joints***

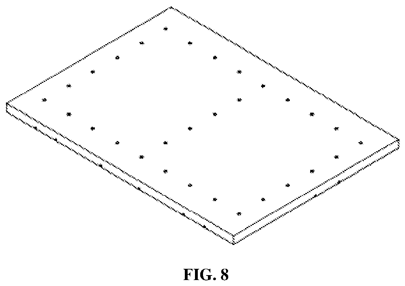

The general setup for measuring thermal conductance in bolted joints consisted of a stepped or single-layer gasket sandwiched between a cold base plate and a heated top plate. A representative case was used to study conditions in which the plate deformation was severe enough to warrant a stepped gasket to enhance contact and thermal performance; *see* Figure 8: a 50 cm × 36 cm plate size, 18 mm plate thickness, 26 bolt configuration. The thickness of the top plate is selected to represent bending stiffness on par with a honeycomb panel like those commonly used in spacecraft builds.

The thick aluminum base plate was cooled by a steady flow of cold water circulated through a chiller at -30 - 25 °C. Different gaskets, as described above, were applied with a soft rubber roller to adhere smoothly to the interface. The top plate was fitted with one or more ceramic heaters to supply a surface heat flux on the order of about 1 W/cm$^2$. Pairs of thermocouples were mounted in grooves at corresponding locations along the hot and cold plates to measure the interfacial temperature difference. Several pairs of thermocouples were distributed along the plate area at strategic locations in order to map the temperature gradient across the interface surface. Approximate temperature contours were later generated via 2D interpolation of these thermocouple data points. Approximate temperature contours were later generated via 2D interpolation of these thermocouple data points. These experiments were conducted in vacuum at a target pressure of 1 x 10$^{-6}$ torr.

*Calculation of Thermal Contact Conductance*

From the steady-state measurements, thermal contact conductance, $h_c$, and the thermal contact resistance, $R$, can be obtained at each thermocouple location through

$$h_c = \frac{1}{R} = \frac{q''}{T_H - T_C}$$

where $q''$ is the average heat flux over the plate surface based off of the total heat production by the ceramic heaters mounted on the top plate surface. Unless otherwise noted, average thermal contact conductance for the interface is then estimated by averaging the local $h_c$ calculated at each thermocouple location.

*Contact Measurements Using Pressure Sensitive Film*

To assess the regions of contact between the bolted joint surfaces and the gaskets, pressure sensitive film was used (Extreme Low, Fujifilm Prescale Pressure Indicating Film).

**Results and Discussion:**

***Verification of deflection model contact prediction for single and double-layer gaskets***

Model predictions of beam contact versus separation were initially verified using pressure-sensitive film (not shown). When observing the coloring of the pressure maps, the contact matched predictions. As predicted, contact was achieved in the second layer gasket.

The first layer of the gasket was 125 μm in height. Using pressure sensitive film to reveal where the top plate/beam made contact with the gasket the region of contact near each bolt for this single-layer control test was found to be ~33 mm ± 2 mm. Then a second layer was placed atop to form a stepped gasket. The second layer was 65 μm in height, and positioned to conform to the predicted curvature of the beam. The contact measured for the stepped gasket was 28 mm near each bolt (the first layer of stepped gasket), and an additional 10 mm at each edge of the 2nd layer of gasket. Therefore, the total area of contact was thereby found to increase by 15% through the use of a stepped gasket, as opposed to a single-layer gasket. Moreover, the fact that the contact was more distributed along the length of the beam (as opposed to being localized near the bolts) has a more pronounced impact on spreading resistance, which has a significant effect on full interface thermal conductance.

The two layered case had a 33% increase in average thermal conductance as compared to the single layer case (1,064 versus 802 W/m$^2$-°C) . Thus, use of stepped gaskets serve to both increase contact area and better distribute the contact area. The more even distribution of interfacial contact is advantageous due to the effects of interplanar heat spreading resistance and the better distribution also results in the reduction of hot spots at thermal interfaces where stepped gaskets are used.

Beyond the single layer gasket control and two layered stepped gaskets discussed above, three layered and four layered stepped gaskets test cases were also studied. In these cases, enhanced contact is realized which translated to an overall improvement in contact conductance of 19% (957W/m$^2$-°C) and 52% (1220 W/m$^2$-°C) as compared to the single layer gasket (802 W/m$^2$-°C). The three-layer gasket did not show as high of a conductance increase as the other cases, possibly owed to a lack of contact or proper alignment of the tiers in that case.

Temperature contour maps showed qualitative agreement between ANSYS simulations performed (not shown) and stepped gaskets tested and measured in a vacuum chamber testing. Vacuum testing was conducted in an evacuated chamber at pressures below 1 µTorr. ANSYS predicted conductance correlates with measured thermal performance.

**Conclusions:**

The studies described above show that a multilayered structuring to afford stepped gaskets can be used in thermal interfaces to enhance interface thermal conductance, such as in bolted joints where plates exhibit deflection and deformation. To address the issue of plate deflection/deformation, it was shown that a stepped gasket could better conform to the naturally deflected plate curvature. Thus, the of a stepped gasket allows for enhance of gasket contact and improvement of thermal contact conductance at the interface, such as in bolted joints. The deflection behavior of bolted joints was modeled using Euler-Bernoulli beam theory and the model was then used to predict the deflection under structured/tiered gaskets and optimize the geometry stepped gaskets. Experiments were found to match model predictions. Based on conductance studies and it was shown that thermal conductance could be improved by up to 52% due to the introduction of as many as 3 additional layers (in the form of stepped gaskets), as compared to a single-layer gasket.

**Example 2. Thermal Testing of Stepped Gaskets**

**Materials and Methods:**

Thermal performance of an interface (not shown) was tested by fastening an aluminum box of size 238 mm x 279 mm to a thick base plate using 16 #8-32 bolts. The box featured inset sidewalls and gussets, with bolts fastened along the perimeter. Thermal testing was performed with multiple pairs of thermocouples affixed at different corresponding locations on the box and under the baseplate. 4 heater blocks were placed inside the box to provide >600 W heating.

Three thermal interface material (TIM) gasket samples were tested:

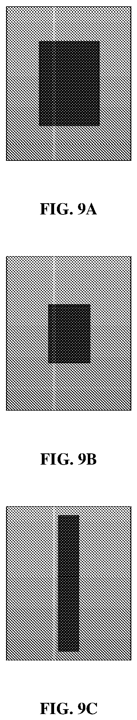

- *Sample 1: Single Layered Gasket* - 125 µm thick and covering the full 238 mm x 279 mm interface;
- *Sample 2: Stepped Gasket* (*see* Figure 9A) - 125 µm thick base layer covering the full 238 mm x 279 mm interface with 65 µm thick second layer thereon sized 104 mm x 124mm;
- *Sample 3: Stepped Gasket* (*see* Figure 9B) - 125 µm thick base layer covering the full 238 mm x 279 mm interface with 65 µm thick second layer thereon sized 66 mm x 80 mm;
- *Sample 4: Stepped Gasket* (*see* Figure 9B) - 125 µm thick base layer covering the full 238 mm x 279 mm interface with 65 µm thick second layer thereon sized 38 mm x 184 mm;

**Results and Discussion:**

For each test, the above samples were each assembled between the base plate and the box, with the box fastened to 20 in-lb torque. Then heated with 600W. Temperature differentials measured at each thermocouple location were used to generate a thermal contour map (not shown) of the interface, whereupon the average thermal contact conductance, $h_{avg}$, was then computed for each test. The results of thermal testing is shown in Table 2 below.

**Table 2. Average Thermal Transmittance of Samples**

| Sample | $h_{avg}$ (W/m$^2$-K) |
|---|---|
| *Sample 1: Single Layered Gasket* | 1736 |

(continued)

| Sample | $h_{avg}$ (W/m²-K) |
|---|---|
| *Sample 2: Stepped Gasket* | 1660 |
| *Sample 3: Stepped Gasket* | 1925 |
| *Sample 4: Stepped Gasket* | 1385 |

Thermal measurements showed that strategic design of the stepped gasket can be used to maximize overall performance. For instance, net conductance was enhanced by 15% in Sample 3, which targeted central heat dissipation.

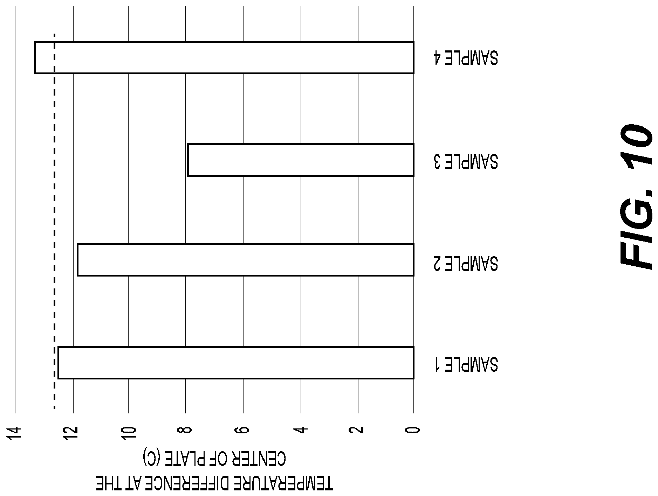

The stepped gaskets can also provide an improvement in cooling hot spot locations (in the center of the plate and/or near the heater locations). In Sample 3, this resulted in a lower center temperature by increasing local conductance by 36%. *See* Figure 10 bar graph.

Unless defined otherwise, all technical and scientific terms used herein have the same meanings as commonly understood by one of skill in the art to which the disclosed invention belongs.

**Claims**

1. A thermal interface comprising:

   first and second plates;
   a stepped gasket in between the first and second plates; and
   one or more fasteners joining the first and the second plates;
   wherein at least one of the first and/or the second plates exhibits plate deformation, deflection, or curvature;
   wherein the stepped gasket comprises a plurality of layers and there is at least a first base layer and at least a second layer, on top of and in contact with the first base layer, which has a surface area smaller than the surface area of the first base layer;
   wherein the at least second layer of the stepped gasket provides at least one or more contact regions with the at least one of the first and/or the second plates exhibiting plate deformation, deflection, or curvature, as compared to a single layer gasket that is not stepped; and
   wherein the one or more fasteners join the first and the second plates through one or more holes present on the first and the second plates; or wherein the one or more fasteners are threaded fasteners, clamps, clips, push pins, rivets, a pneumatic press, a hydraulic press, or combinations thereof.

2. The thermal interface of claim 1, wherein the first and second plates are independently made of a material selected from the group consisting of aluminum, copper, steel, titanium, zinc, metal matrix composites (such as AlSiC or aluminum-graphite), and metal laminate structures (such as honeycomb panels or fiber metal laminates); or the first and second plates are independently made of a plastic selected from the group consisting of acrylonitrile butadiene styrene, polycarbonate, nylon, epoxy, glass-reinforced epoxy laminate material (such as FR4), high-pressure fiberglass laminate (such as G10), fiberglass composites, PEEK, polyethylene, polyethylene terephthalate glycol, polypropylene, polyurethane, polyvinyl chloride, polyimide, polytetrafluoroethylene, polylactic acid, PEDOT:PSS (poly(3,4-ethylenedioxythiophene) polystyrene sulfonate), PARA, polyphenylene sulfide, polyamide-imide, and polyetherimide; or the first and second plates are independently made of a ceramic selected from the group consisting of alumina, aluminum nitride, zirconia, zirconia alumina, beryllium oxide, carbon fiber, graphite, silicon carbide, silicon dioxide, silicon nitride, $Y_2O_3$, TiC, $SrAl_2O_3$, ZrC, HfC, TaC, $ZrB_2$, $HfB_2$, $Mo_2B_5$, $MoSi_2$ TiN, YrN, co-fired ceramics (including high temperature co-fired ceramics (HTCC), low temperature co-fired ceramics (LTCC), ultra low temperature co-fired ceramics (ULTCC), including those consisting of phosphates, silicates, borates, molybdates, vanadates, tellurates and tungstates).

3. The thermal interface of claim 1, wherein the threaded fasteners are bolts and nuts; or the threaded fasteners are bolts and potted inserts.

4. The thermal interface of claim 1, wherein the at least one or more contact regions from the second layer of the stepped gasket to the at least one of the first and/or the second plates exhibiting plate deformation, deflection, or curvature provide an increase in temperature uniformity of the first and/or second plate providing an average thermal conductance across the thermal interface at least 25% higher than that of the same thermal interface with a single layer gasket that is not stepped therein.

5. The thermal interface of claim 1, wherein each of the layers of the stepped gasket independently has a thickness in a range of between 50 μm and 500 μm.

6. The thermal interface of claim 1, wherein the stepped gasket is made of a multilayered or multitiered structure comprising:

at least a first layer or tier comprising a carbon nanotube array comprising vertically aligned carbon nanotubes grown from opposing surfaces of a first planar substrate, and
at least a second layer or tier comprising a carbon nanotube array comprising vertically aligned carbon nanotubes grown from opposing surfaces of a second planar substrate,
wherein the at least first layer or tier and the at least second layer or tier are stacked and the vertically aligned carbon nanotubes of the at least first layer or tier at least partially interdigitate the vertically aligned carbon nanotubes of the at least second layer or tier which are interfacing each other.

7. The thermal interface of claim 1 further comprising one or more shims.

8. The thermal interface of claim 7, wherein the one or more shims are made of a multilayered or multitiered structure comprising:

at least a first layer or tier comprising a carbon nanotube array comprising vertically aligned carbon nanotubes grown from opposing surfaces of a first planar substrate, and
at least a second layer or tier comprising a carbon nanotube array comprising vertically aligned carbon nanotubes grown from opposing surfaces of a second planar substrate,
wherein the at least first layer or tier and the at least second layer or tier are stacked and the vertically aligned carbon nanotubes of the at least first layer or tier at least partially interdigitate the vertically aligned carbon nanotubes of the at least second layer or tier which are interfacing each other.

9. A method of fabricating the thermal interface of claim 1, the method comprising the steps of:

(1) providing first and second plates;
(2) providing a stepped gasket;
(3) placing the stepped gasket in between the first and the second plates;
(4) joining the first and the second plates with one or more fasteners;

wherein at least one of the first and/or the second plates exhibits plate deformation, deflection, or curvature when joined by the one or more fasteners;
wherein the stepped gasket comprises a plurality of layers and there is at least a first base layer and at least a second layer, on top of and in contact with the first base layer, which has a surface area smaller than the surface area of the first base layer;
wherein the at least second layer of the stepped gasket provides at least one or more contact regions with the at least one of the first and/or the second plates exhibiting plate deformation, deflection, or curvature, as compared to a single layer gasket that is not stepped; and
wherein the one or more fasteners join the first and the second plates through one or more holes present on the first and the second plates; or wherein the one or more fasteners are threaded fasteners, clamps, clips, push pins, rivets, a pneumatic press, a hydraulic press, or combinations thereof.

10. The method of claim 9, wherein the first and second plates are independently made of a material selected from the group consisting of aluminum, copper, steel, titanium, zinc, metal matrix composites (such as AlSiC or aluminum-graphite), and metal laminate structures (such as honeycomb panels or fiber metal laminates); or the first and second plates are independently made of a plastic selected from the group consisting of acrylonitrile butadiene styrene, polycarbonate, nylon, epoxy, glass-reinforced epoxy laminate material (such as FR4), high-pressure fiberglass laminate (such as G10), fiberglass composites, PEEK, polyethylene, polyethylene terephthalate glycol, polypropylene, polyurethane, polyvinyl chloride, polyimide, polytetrafluoroethylene, polylactic acid, PEDOT:PSS (poly(3,4-ethylenedioxythiophene) polystyrene sulfonate), PARA, polyphenylene sulfide, polyamide-imide, and polyetherimide; or the first and second plates are independently made of a ceramic selected from the group consisting of alumina, aluminum nitride, zirconia, zirconia alumina, beryllium oxide, carbon fiber, graphite, silicon carbide, silicon dioxide, silicon nitride, $Y_2O_3$, TiC, $SrAl_2O_3$, ZrC, HfC, TaC, $ZrB_2$, $HfB_2$, $Mo_2B_5$, $MoSi_2$ TiN, YrN, co-fired ceramics (including high temperature co-fired ceramics (HTCC), low temperature co-fired ceramics (LTCC), ultra low temperature co-fired ceramics (ULTCC), including those consisting of phosphates, silicates, borates, molybdates, vanadates, tellurates and tungstates).

11. The method of claim 9, wherein the threaded fasteners are bolts and nuts; or the threaded fasteners are bolts and potted inserts.

12. The method of claim 9, wherein each of the plurality of layers of the stepped gasket independently has a thickness in a range of between 50 μm and 500 μm.

13. The method of claim 9, wherein the method further comprises a step of placing one or more shims between the first and the second plates prior to step (4).

14. A device comprising the thermal interface of claim 1.

15. The device of claim 14, wherein the device is an aerospace device selected from satellites, space vehicles, or space systems operating under vacuum.


**Patentansprüche**

1. Thermische Schnittstelle, umfassend:

   erste und zweite Platte;
   eine abgestufte Dichtung zwischen der ersten und der zweiten Platte; und
   ein oder mehrere Befestiger, die die erste und die zweite Platte verbinden;
   wobei mindestens eine der ersten und/oder zweiten Platten eine Plattenverformung, Durchbiegung oder Krümmung aufweist;
   wobei die abgestufte Dichtung eine Vielzahl von Schichten umfasst und es mindestens eine erste Basisschicht und
   mindestens eine zweite Schicht gibt, die auf der ersten Basisschicht liegt und mit dieser in Kontakt steht, und deren Oberflächenbereich kleiner als der Oberflächenbereich der ersten Basisschicht ist;
   wobei die mindestens zweite Schicht der abgestuften Dichtung mindestens eine oder mehrere Kontaktregionen mit der mindestens einen der ersten und/oder zweiten Platten bereitstellt, die im Vergleich zu einer einlagigen Dichtung, die nicht abgestuft ist, eine Plattenverformung, -durchbiegung oder -krümmung aufweisen; und
   wobei der eine oder die mehreren Befestiger die erste und
   die zweite Platte durch ein oder mehrere Löcher verbinden, die auf der ersten und der zweiten Platte vorhanden sind; oder wobei der eine oder die mehreren Befestiger Gewindeverbinder, Klammern, Clips, Druckstifte, Nieten, eine pneumatische Presse, eine hydraulische Presse oder Kombinationen davon sind.

2. Thermische Schnittstelle nach Anspruch 1, wobei die erste und die zweite Platte unabhängig voneinander aus einem Material bestehen, ausgewählt aus der Gruppe, bestehend aus Aluminium, Kupfer, Stahl, Titan, Zink, Metallmatrix-Verbundwerkstoffen (wie AlSiC oder Aluminium-Graphit) und Metall-Laminat-Strukturen (wie Wabenplatten oder Faser-Metall-Laminate); oder die erste und die zweite Platte unabhängig voneinander aus einem Kunststoff bestehen, der ausgewählt ist aus der Gruppe, bestehend aus Acrylnitril-Butadien-Styrol, Polycarbonat, Nylon, Epoxid, glasverstärktem Epoxid-Laminatmaterial (wie FR4), Hochdruck-Glasfaserlaminat (wie G10), Glasfaserverbundstoffe, PEEK, Polyethylen, Polyethylenterephthalatglykol, Polypropylen, Polyurethan, Polyvinylchlorid, Polyimid, Polytetrafluorethylen, Polymilchsäure, PEDOT: PSS (Poly(3,4-ethylendioxythiophen)polystyrolsulfonat), PARA, Polyphenylensulfid, Polyamidimid und Polyetherimid; oder die erste und die zweite Platte unabhängig voneinander aus einer Keramik bestehen, die ausgewählt ist aus der Gruppe, bestehend aus Aluminiumoxid, Aluminiumnitrid, Zirkoniumoxid, Zirkoniumoxid, Berylliumoxid, Kohlenstofffaser, Graphit, Siliziumkarbid, Siliziumdioxid, Siliziumnitrid, $Y_2O_3$, TiC, $SrAl_2O_3$, ZrC, HfC, TaC, $ZrB_2$, $HfB_2$, $Mo_2B_5$, $MoSi_2$ TiN, YrN, gemeinsam gebrannte Keramiken (einschließlich gemeinsam gebrannter Hochtemperaturkeramiken (HTCC), gemeinsam gebrannter Niedertemperaturkeramiken (LTCC), gemeinsam gebrannter Ultratieftemperaturkeramiken (ULTCC), einschließlich solcher, die aus Phosphaten, Silikaten, Boraten, Molybdaten, Vanadaten, Telluraten und Wolframaten bestehen).

3. Thermische Schnittstelle nach Anspruch 1, wobei die Befestiger mit Gewinde Bolzen und Muttern sind, oder die Befestiger mit Gewinde Bolzen und vergossene Einsätze sind.

4.  Thermische Schnittstelle nach Anspruch 1, wobei mindestens eine oder mehrere Kontaktregionen von der zweiten Schicht der abgestuften Dichtung zu mindestens einer der ersten und/oder zweiten Platten, die eine Plattenverformung, -durchbiegung oder -krümmung aufweisen, eine Erhöhung der Temperaturgleichmäßigkeit der ersten und/oder zweiten Platte bereitstellen, die einen durchschnittlichen Wärmeleitwert über die thermische Schnittstelle bereitstellt, der mindestens 25 % höher ist als der der gleichen thermischen Schnittstelle mit einer einschichtigen Dichtung, die darin nicht abgestuft ist.

5.  Thermische Schnittstelle nach Anspruch 1, wobei jede der Schichten der abgestuften Dichtung unabhängig eine Dicke in einem Bereich zwischen 50 $\mu$m und 500 $\mu$m aufweist.

6.  Thermische Schnittstelle nach Anspruch 1, wobei die abgestufte Dichtung aus einer mehrschichtigen oder mehrlagigen Struktur besteht, umfassend:

    mindestens eine erste Schicht oder Lage, umfassend ein Kohlenstoffnanoröhrenarray mit vertikal ausgerichteten Kohlenstoffnanoröhren, die auf gegenüberliegenden Oberflächen eines ersten ebenen Substrats gewachsen sind, und
    mindestens eine zweite Schicht oder Lage, umfassend ein Kohlenstoffnanoröhrenarray mit vertikal ausgerichteten Kohlenstoffnanoröhren, die auf gegenüberliegenden Oberflächen eines zweiten ebenen Substrats gewachsen sind,
    wobei die mindestens erste Schicht oder Lage und die mindestens zweite Schicht oder Lage gestapelt sind und die vertikal ausgerichteten Kohlenstoffnanoröhren der mindestens ersten Schicht oder Lage mindestens teilweise in die vertikal ausgerichteten Kohlenstoffnanoröhren der mindestens zweiten Schicht oder Lage eingreifen, die aneinander angrenzen.

7.  Thermische Schnittstelle nach Anspruch 1, ferner umfassend eine oder mehrere Unterlegscheiben.

8.  Thermische Schnittstelle nach Anspruch 7, wobei die eine oder mehreren Zwischenlagen aus einer mehrschichtigen oder mehrlagigen Struktur bestehen, umfassend:

    mindestens eine erste Schicht oder Lage, umfassend ein Kohlenstoffnanoröhrenarray mit vertikal ausgerichteten Kohlenstoffnanoröhren, die auf gegenüberliegenden Oberflächen eines ersten ebenen Substrats gewachsen sind, und
    mindestens eine zweite Schicht oder Lage, umfassend ein Kohlenstoffnanoröhrenarray mit vertikal ausgerichteten Kohlenstoffnanoröhren, die auf gegenüberliegenden Oberflächen eines zweiten ebenen Substrats gewachsen sind,
    wobei die mindestens erste Schicht oder Lage und die mindestens zweite Schicht oder Lage gestapelt sind und die vertikal ausgerichteten Kohlenstoffnanoröhren der mindestens ersten Schicht oder Lage mindestens teilweise in die vertikal ausgerichteten Kohlenstoffnanoröhren der mindestens zweiten Schicht oder Lage eingreifen, die aneinander angrenzen.

9.  Verfahren zur Herstellung der thermischen Schnittstelle nach Anspruch 1, das Verfahren umfassend die folgenden Schritte:

    (1) Bereitstellen von ersten und zweiten Platten;
    (2) Bereitstellen einer abgestuften Dichtung;
    (3) Platzieren der abgestuften Dichtung zwischen der ersten und der zweiten Platte;
    (4) Verbinden Sie die erste und die zweite Platte mit einem oder mehreren Befestigern;

    wobei mindestens eine der ersten und/oder zweiten Platten eine Plattenverformung, Durchbiegung oder Krümmung aufweist, wenn sie durch den einen oder die mehreren Befestiger verbunden wird;
    wobei die abgestufte Dichtung eine Vielzahl von Schichten umfasst und es mindestens eine erste Basisschicht und mindestens eine zweite Schicht gibt, die auf der ersten Basisschicht liegt und mit dieser in Kontakt steht, und deren Oberflächenbereich kleiner als der Oberflächenbereich der ersten Basisschicht ist;
    wobei die mindestens zweite Schicht der abgestuften Dichtung mindestens eine oder mehrere Kontaktregionen mit der mindestens einen der ersten und/oder zweiten Platten bereitstellt, die im Vergleich zu einer einlagigen Dichtung, die nicht abgestuft ist, eine Plattenverformung, -durchbiegung oder -krümmung aufweisen; und
    wobei der eine oder die mehreren Befestiger die erste und die zweite Platte durch ein oder mehrere Löcher verbinden, die auf der ersten und der zweiten Platte vorhanden sind; oder wobei der eine oder die mehreren Befestiger Gewindeverbinder, Klammern, Clips, Druckstifte, Nieten, eine pneumatische Presse, eine hydraulische Presse oder Kombinationen davon sind.

10. Verfahren nach Anspruch 9, wobei die erste und die zweite Platte unabhängig voneinander aus einem Material bestehen, ausgewählt aus der Gruppe, bestehend aus Aluminium, Kupfer, Stahl, Titan, Zink, Metallmatrix-Verbundwerkstoffen (wie AlSiC oder Aluminium-Graphit) und Metall-Laminat-Strukturen (wie Wabenplatten oder Faser-Metall-Laminate); oder die erste und die zweite Platte unabhängig voneinander aus einem Kunststoff bestehen, der ausgewählt ist aus der Gruppe, bestehend aus Acrylnitril-Butadien-Styrol, Polycarbonat, Nylon, Epoxid, glasverstärktem Epoxid-Laminatmaterial (wie FR4), Hochdruck-Glasfaserlaminat (wie G10), Glasfaserverbundstoffe, PEEK, Polyethylen, Polyethylenterephthalatglykol, Polypropylen, Polyurethan, Polyvinylchlorid, Polyimid, Polytetrafluorethylen, Polymilchsäure, PEDOT: PSS (Poly(3,4-ethylendioxythiophen)polystyrolsulfonat) , PARA, Polyphenylensulfid, Polyamidimid und Polyetherimid; oder die erste und die zweite Platte unabhängig voneinander aus einer Keramik bestehen, die ausgewählt ist aus der Gruppe, bestehend aus Aluminiumoxid, Aluminiumnitrid, Zirkoniumoxid, Zirkoniumoxid, Berylliumoxid, Kohlenstofffaser, Graphit, Siliziumkarbid, Siliziumdioxid, Siliziumnitrid, $Y_2O_3$, TiC, $SrAl_2O_3$, ZrC, HfC, TaC, $ZrB_2$, $HfB_2$, $Mo_2B_5$, $MoSi_2$ TiN, YrN, gemeinsam gebrannte Keramiken (einschließlich gemeinsam gebrannter Hochtemperaturkeramiken (HTCC), gemeinsam gebrannter Niedertemperaturkeramiken (LTCC), gemeinsam gebrannter Ultratieftemperaturkeramiken (ULTCC), einschließlich solcher, die aus Phosphaten, Silikaten, Boraten, Molybdaten, Vanadaten, Telluraten und Wolframaten bestehen).

11. Verfahren nach Anspruch 9, wobei die Befestiger mit Gewinde Bolzen und Muttern sind, oder die Befestiger mit Gewinde Bolzen und vergossene Einsätze sind.

12. Verfahren nach Anspruch 9, wobei jede der Vielzahl von Schichten der abgestuften Dichtung unabhängig eine Dicke in einem Bereich zwischen 50 $\mu$m und 500 $\mu$m aufweist.

13. Verfahren nach Anspruch 9, wobei das Verfahren ferner einen Schritt umfasst, bei dem vor Schritt (4) eine oder mehrere Unterlegplatten zwischen der ersten und der zweiten Platte angebracht werden.

14. Vorrichtung, umfassend die thermische Schnittstelle nach Anspruch 1.

15. Vorrichtung nach Anspruch 14, wobei es sich bei der Vorrichtung um eine Raumfahrtvorrichtung handelt, die aus Satelliten, Raumfahrzeugen oder unter Vakuum arbeitenden Raumfahrtsystemen ausgewählt ist.

**Revendications**

1. Interface thermique comprenant :

des première et seconde plaques ;
un joint étagé entre les première et seconde plaques ; et
une ou plusieurs fixations reliant les première et seconde plaques ;
dans laquelle au moins une des première et/ou seconde plaques présente une déformation, une déviation, ou une courbure de plaque ;
dans laquelle le joint étagé comprend une pluralité de couches et il existe au moins une première couche de base et au moins une seconde couche, sur et en contact avec la première couche de base, qui a une surface inférieure à la surface de la première couche de base ;
dans laquelle l'au moins une seconde couche du joint étagé fournit au moins une ou plusieurs zones de contact avec l'au moins une des première et/ou seconde plaques présentant une déformation, une déviation, ou une courbure de plaque, par rapport à un joint monocouche qui n'est pas étagé ; et
dans laquelle les une ou plusieurs fixations relient les première et seconde plaques par l'intermédiaire d'un ou plusieurs trous présents sur les première et seconde plaques ; ou dans laquelle les une ou plusieurs fixations sont des fixations filetées, des pinces, des clips, des goupilles, des rivets, une presse pneumatique, une presse hydraulique, ou des combinaisons de ceux-ci.

2. Interface thermique selon la revendication 1, dans laquelle les première et seconde plaques sont indépendamment constituées d'un matériau choisi parmi le groupe constitué de l'aluminium, du cuivre, de l'acier, du titane, du zinc, des composites à matrice métallique (tels que l'AlSiC ou l'aluminium-graphite), et des structures stratifiées métalliques (telles que les panneaux en nid d'abeille ou les stratifiés métalliques en fibre) ; ou les première et seconde plaques sont indépendamment constituées d'un plastique choisi parmi le groupe constitué de l'acrylonitrile butadiène styrène, du polycarbonate, du nylon, de l'époxy, du matériau stratifié époxy renforcé de verre (tel que le FR4), du stratifié en fibre de verre haute pression (tel que le G10), des composites en fibre de verre, du PEEK, du polyéthylène, du polyéthylène téréphtalate glycol, du polypropylène, du polyuréthane, du polychlorure de vinyle, du polyimide, du polytétrafluoroéthylène, de l'acide polylactique, du PEDOT:PSS (poly(3,4-éthylènedioxythiophène) polystyrène sulfonate), du PARA, du sulfure de polyphénylène, du polyamide-imide, et du polyétherimide ; ou les première et seconde plaques sont indépendamment constituées d'une céramique choisie parmi le groupe constitué d'alumine, de nitrure d'aluminium, de zircone, d'alumine de zircone, d'oxyde de béryllium, de fibre de carbone, de graphite, de carbure de silicium, de dioxyde de silicium, de nitrure de silicium, de $Y_2O_3$, de TiC, de $SrAl_2O_3$, de ZrC, de HfC, de TaC, de $ZrB_2$, de $HfB_2$, de $Mo_2B_5$, de $MoSi_2$, de TiN, de YrN, de céramiques co-frittées (y compris les céramiques co-frittées à haute température (HTCC), les céramiques co-frittées à basse température (LTCC), les céramiques co-frittées à ultra-basse température (ULTCC), y compris celles constituées de phosphates, de silicates, de borates, de molybdates, de vanadates, de tellurates et de tungstates).

3. Interface thermique selon la revendication 1, dans laquelle les fixations filetées sont des boulons et des écrous ; ou les fixations filetées sont des boulons et des inserts enrobés.

4. Interface thermique selon la revendication 1, dans laquelle l'au moins une ou plusieurs zones de contact de la seconde couche du joint étagé à l'au moins une des première et/ou seconde plaques présentent une déformation, une déviation, ou une courbure de plaque fournissent une augmentation de l'uniformité de température des première et/ou seconde plaques fournissant une conductance thermique moyenne à travers l'interface thermique d'au moins 25 % supérieure à celle de la même interface thermique avec un joint monocouche qui n'est pas étagé en son sein.

5. Interface thermique selon la revendication 1, dans laquelle chacune des couches du joint étagé a indépendamment une épaisseur comprise entre 50 µm et 500 µm.

6. Interface thermique selon la revendication 1, dans laquelle le joint étagé est constitué d'une structure multicouche ou à plusieurs niveaux comprenant :

au moins une première couche ou un premier niveau comprenant un réseau de nanotubes de carbone comprenant des nanotubes de carbone alignés verticalement et
cultivés à partir de surfaces opposées d'un premier substrat plan, et
au moins une seconde couche ou un second niveau comprenant un réseau de nanotubes de carbone comprenant des nanotubes de carbone alignés verticalement et
cultivés à partir de surfaces opposées d'un second substrat plan,
dans laquelle l'au moins une première couche ou premier niveau et l'au moins une seconde couche ou second niveau sont empilés et les nanotubes de carbone alignés verticalement de l'au moins une première couche ou premier niveau s'entrelacent au moins partiellement avec les nanotubes de carbone alignés verticalement de l'au moins une seconde couche ou second niveau qui sont en interface l'un avec l'autre.

7. Interface thermique selon la revendication 1 comprenant en outre une ou plusieurs cales.

8. Interface thermique selon la revendication 7, dans laquelle les une ou plusieurs cales sont constituées d'une structure multicouche ou à plusieurs niveaux comprenant :

au moins une première couche ou un premier niveau comprenant un réseau de nanotubes de carbone comprenant des nanotubes de carbone alignés verticalement et
cultivés à partir de surfaces opposées d'un premier substrat plan, et
au moins une seconde couche ou un second niveau comprenant un réseau de nanotubes de carbone comprenant des nanotubes de carbone alignés verticalement et
cultivés à partir de surfaces opposées d'un second substrat plan,
dans laquelle l'au moins une première couche ou premier niveau et l'au moins une seconde couche ou second niveau sont empilés et les nanotubes de carbone alignés verticalement de l'au moins une première couche ou premier niveau s'entrelacent au moins partiellement avec les nanotubes de carbone alignés verticalement de l'au moins une seconde couche ou second niveau qui sont en interface l'un avec l'autre.

**9.** Procédé de fabrication de l'interface thermique selon la revendication 1, le procédé comprenant les étapes suivantes :

(1) la fourniture des première et seconde plaques ;
(2) la fourniture d'un joint étagé ;
(3) la disposition du joint étagé entre les première et seconde plaques ;
(4) la liaison des première et seconde plaques à l'aide d'une ou plusieurs fixations ;

dans lequel au moins une des première et/ou seconde plaques présente une déformation, une déviation ou une courbure de plaque lorsqu'elle est reliée par les une ou plusieurs fixations ;
dans lequel le joint étagé comprend une pluralité de couches et il existe au moins une première couche de base et au moins une seconde couche, sur et en contact avec la première couche de base, qui a une surface inférieure à la surface de la première couche de base ;
dans lequel l'au moins une seconde couche du joint étagé fournit au moins une ou plusieurs zones de contact avec l'au moins une des première et/ou seconde plaques présentant une déformation, une déviation, ou une courbure de plaque, par rapport à un joint monocouche qui n'est pas étagé ; et
dans lequel les une ou plusieurs fixations relient les première et seconde plaques par l'intermédiaire d'un ou plusieurs trous présents sur les première et seconde plaques ; ou dans laquelle les une ou plusieurs fixations sont des fixations filetées, des pinces, des clips, des goupilles, des rivets, une presse pneumatique, une presse hydraulique, ou des combinaisons de ceux-ci.

**10.** Procédé selon la revendication 9, dans lequel les première et seconde plaques sont indépendamment constituées d'un matériau choisi parmi le groupe constitué de l'aluminium, du cuivre, de l'acier, du titane, du zinc, des composites à matrice métallique (tels que l'AlSiC ou l'aluminium-graphite), et des structures stratifiées métalliques (telles que les panneaux en nid d'abeille ou les stratifiés métalliques en fibre) ; ou les première et seconde plaques sont indépendamment constituées d'un plastique choisi parmi le groupe constitué de l'acrylonitrile butadiène styrène, du polycarbonate, du nylon, de l'époxy, du matériau stratifié époxy renforcé de verre (tel que le FR4), du stratifié en fibre de verre haute pression (tel que le G10), des composites en fibre de verre, du PEEK, du polyéthylène, du polyéthylène téréphtalate glycol, du polypropylène, du polyuréthane, du polychlorure de vinyle, du polyimide, du polytétrafluoroéthylène, de l'acide polylactique, du PEDOT:PSS (poly(3,4-éthylènedioxythiophène) polystyrène sulfonate), du PARA, du sulfure de polyphénylène, du polyamide-imide, et du polyétherimide ; ou les première et seconde plaques sont indépendamment constituées d'une céramique choisie parmi le groupe constitué d'alumine, de nitrure d'aluminium, de zircone, d'alumine de zircone, d'oxyde de béryllium, de fibre de carbone, de graphite, de carbure de silicium, de dioxyde de silicium, de nitrure de silicium, de $Y_2O_3$, de TiC, de $SrAl_2O_3$, de ZrC, de HfC, de TaC, de $ZrB_2$, de $HfB_2$, de $Mo_2B_5$, de $MoSi_2$, de TiN, de YrN, de céramiques co-frittées (y compris les céramiques co-frittées à haute température (HTCC), les céramiques co-frittées à basse température (LTCC), les céramiques co-frittées à ultra-basse température (ULTCC), y compris celles constituées de phosphates, de silicates, de borates, de molybdates, de vanadates, de tellurates et de tungstates).

**11.** Procédé selon la revendication 9, dans lequel les fixations filetées sont des boulons et des écrous ; ou les fixations filetées sont des boulons et des inserts enrobés.

**12.** Procédé selon la revendication 9, dans lequel chacune de la pluralité de couches du joint étagé a indépendamment une épaisseur comprise entre 50 $\mu$m et 500 $\mu$m.

**13.** Procédé selon la revendication 9, dans lequel le procédé comprend en outre une étape consistant à placer une ou plusieurs cales entre les première et seconde plaques avant l'étape (4).

**14.** Dispositif comprenant l'interface thermique selon la revendication 1.

**15.** Dispositif selon la revendication 14, dans lequel le dispositif est un dispositif aérospatial choisi parmi les satellites, les véhicules spatiaux, ou les systèmes spatiaux fonctionnant sous vide.

**FIG. 1A**

**FIG. 1B**

**FIG. 2**

400 410 420

**FIG. 3A**

500 510 530 520

**FIG. 3B**

**FIG. 4**

700
710
720
730
740

**FIG. 5A**

800
810
820
830
840

**FIG. 5B**

FIG. 6A

FIG. 6B

FIG. 7

**FIG. 8**

**FIG. 9A**

**FIG. 9B**

**FIG. 9C**

*FIG. 10*

## REFERENCES CITED IN THE DESCRIPTION

**Patent documents cited in the description**

- US 49234921
- US 10561040 B
- EP 3405013 A
- US 20140015158 A1
- US 7993620 B2